# EUROPÄISCHE PATENTANMELDUNG

(11) **EP 2 749 167 A1**
(43) Veröffentlichungstag der Anmeldung: **02.07.2014**
(21) Anmeldenummer: 12199579.9
(22) Anmeldetag: 28.12.2012
(51) Int. Cl.: A01N 59/16, A01N 43/40, A01N 43/80, A01N 47/04, A01P 1/00, A01P 3/00

(54) **Formulierung zur antimikrobiellen Ausrüstung von Polyvinylchlorid-Zusammensetzungen**

(71) Anmelder: Sanitized AG, 3400 Burgdorf (CH)
(72) Erfinder: Zeller, Dietmar, 3063 Ittigen (CH); Katzenmeier, Heinz, 3401 Burgdorf (CH); Stutte, Peter, Dr., 3400 Burgdorf (CH)
(74) Vertreter: Jacobi, Markus Alexander

(57) **Zusammenfassung**

Die vorliegende Erfindung betrifft Formulierungen enthaltend mindestens zwei antimikrobielle Wirkstoffe zur antimikrobiellen, insbesondere zur antimykotischen, Ausrüstung von Polymer-Materialien auf Basis von Polyvinylchlorid (PVC), insbesondere von Formteilen und Beschichtungen aus Weich-PVC. Die erfindungsgemäßen antimikrobiellen Formulierungen enthalten Zinkpyrithion (ZnPT) als ersten antimikrobiellen Wirkstoff W1 und 2-n-Butyl-1,2-benzisothiazolin-3-on (BBIT) oder N-(Trichlormethylthio)-phthalimid (Folpet) als zweiten antimikrobiellen Wirkstoff W2 in einem synergistischen Gewichtsverhältnis W1 zu W2 im Bereich von 1:4 bis 1:99.

## Beschreibung

Die vorliegende Erfindung betrifft Formulierungen enthaltend mindestens zwei antimikrobielle Wirkstoffe zur antimikrobiellen, insbesondere zur antimykotischen Ausrüstung von Polymer-Materialien auf Basis von Polyvinylchlorid (PVC), insbesondere von Formteilen und Beschichtungen aus Weich-PVC. Die erfindungsgemäßen antimikrobiellen Formulierungen enthalten Zinkpyrithion (ZnPT) als ersten antimikrobiellen Wirkstoff W1 und 2-n-Butyl-1,2-benzisothiazolin-3-on (BBIT) oder N-(Trichlormethylthio)-phthalimid (Folpet) als zweiten antimikrobiellen Wirkstoff W2 in einem (synergistischen) Gewichtsverhältnis W1 zu W2 im Bereich von 1:4 bis 1:99. Die vorliegende Erfindung betrifft zudem ein Verfahren zur Herstellung der Formulierungen und deren Verwendungen.

Darüberhinaus betrifft die vorliegende Erfindung PVC-Formmassen und PVC-Formteile, insbesondere PVC-Folien, PVC-Fußbodenbeläge und PVC-Planen, welche mit der erfindungsgemäßen Formulierung ausgerüstet wurden. Insbesondere bezieht sich die Erfindung auch auf die Verwendung von der erfindungsgemäßen antimikrobiellen Formulierung zum Konservieren von PVC, insbesondere von Weich-PVC.

Polyvinylchlorid (PVC) ist ein seit langer Zeit bekannter thermoplastischer Kunststoff, der in vielen Bereichen angewendet wird, beispielsweise bei der Herstellung von Fußböden, Wand- und Dachverkleidungen, Rohren, Kabelummantelungen, Planen, Zelten, Teich- und Schwimmbadfolien, Kunstleder, Dichtungen und Lederbeschichtungen. In vielen Anwendungsgebieten werden antimikrobielle Wirkstoffe benötigt, um PVC, insbesondere Weich-PVC, vor dem Befall durch Mikroorganismen, wie Bakterien, Pilzen und Algen zu schützen. Dies gilt insbesondere für den Einsatz von PVC-Produkte an Stellen mit hoher Feuchtigkeit, sowohl im Innenbereich, z. B. in Gebäuden von Molkereien oder Brauereien, als auch im Außenbereich, z. B. an Stellen, die ungünstigen Witterungsbedingungen ausgesetzt sind.

Ein Algen- und/oder Pilzbefall macht die Oberflächen nicht nur optisch unansehnlich sondern führt auch zur Materialschädigung und zur Verkürzung der Gebrauchsdauer der entsprechenden Produkte. Allerdings beeinträchtigen die eingesetzten antimikrobiellen Wirkstoffe häufig andere Eigenschaften des PVC-Produktes, z.B. des PVC-Formteils, so wird häufig die thermische Stabilität gegenüber Vergilbung vermindert. Zudem werden hohe Anforderungen an die Beständigkeit der antimikrobiellen Ausrüstung gegenüber UV-Strahlung und gegen Auswaschen z.B. durch Regen gestellt. Ein Problem bei der antimikrobiellen Ausrüstung von PVC-Polymermaterialien und insbesondere Weich-PVC-Polymermaterialien ist die Migration der antimikrobiellen Wirkstoffe oder der Weichmacher aus dem Polymermaterial an die Oberfläche und in benachbarte Materialien während der Benutzung über einen Zeitraum von wenigen Monaten bis zu Jahren.

Zu den bekannten antimikrobiellen Wirkstoffen gehören beispielsweise Zink- und Natrium-Pyrithion. WO 2005/123818 beschreibt den Einsatz von Zinkpyrithion in Polyvinylchlorid-Zusammensetzungen unter Verwendung eines speziellen Thermo-und Licht-Stabilisators. Es wird beschrieben, dass der Zusatz von Zinkpyrithion zu Polyvinylchlorid-Formmassen, die thermisch verarbeitet werden, die Stabilität der Formmassen gegenüber UV-Strahlung und Hitze beeinträchtigt.

Weitere bekannte antimikrobielle Wirkstoffe sind Isothiazolinone, beispielsweise 1,2-Benzisothiazolin-3-on (BIT), 2-n-Butyl-1,2-benzisothiazolin-3-on (BBIT), 2-n-Octylisothiazolin-3-on (OIT), Methylisothiazolin-3-on (MIT) und 4,5-Dichlor-2-n-octyl-4-isothiazolin-3-on (DCOIT). In EP-A 0 676 140 werden Biozid-Zusammensetzungen beschrieben, die 2-n-Octylisothiazolin-3-on (OIT) und Methylisothiazolin-3-on (MIT) enthalten. Die antimikrobielle Komponente 4,5-Dichlor-2-n-octyl-4-isothiazolin-3-on (DCOIT) ist als Fungizid im Handel erhältlich, beispielsweise als Rozone® TM 2000 (Hersteller: Rohm & Haas Company).

Darüber hinaus ist beispielsweise der Einsatz von Phthalimiden als Biozid im Stand der Technik beschrieben. Die Verbindung N-(Trichlormethylthio)-phthalimid (Folpet) ist als Pflanzenschutzmittel bekannt und wird beispielsweise im Weinbau eingesetzt. Das Dokument WO 2011/150224 beschreibt hoch-konzentrierte wässrige Dispersionen, die verschiedene Biozid-Wirkstoffe enthalten können, unter anderem sind Folpet, BIT, MIT und ZnPT als Komponenten genannt. Der Einsatz in PVC-Polymermaterialien und eine bevorzugte Kombination von ZnPT und Folpet wird jedoch nicht beschrieben.

In der WO 2012/076529 sind Polyolefin-Zusammensetzungen beschrieben, die insbesondere eine Wirkstoffkombination aus ZnPT, BBIT und/oder 2-n-Octylisothiazolin-3-on (OIT) enthalten.

In der WO 2008/046746 wird ein akarizides Polymermaterial, beispielsweise aus Polyolefinen, Polystyrol, Styrol-Copolymeren oder aus Polyvinylchlorid (PVC) beschrieben. Diese Polymermaterialien enthalten einen akariziden ersten Wirkstoffen und optional einen antimikrobiellen Wirkstoff. Insbesondere ist eine Wirkstoff-Kombination von Triclosan und Thiabendazol beschrieben. ZnPT und BBIT sind zwar in der Liste der akariziden Wirkstoffe genannt, es ist jedoch keine Kombination der beiden Wirkstoffe offenbart.

In EP-A 1665933 wird die synergistische antimikrobielle Kombination von 1,2-Benzisothiazolin-3-on mit einer weiteren antimikrobiellen Komponente, ausgewählt aus einer Vielzahl von Wirkstoffen beschrieben, wobei unter anderem auch ZnPT als zweite Komponente beschrieben wird. Der Einsatz dieser Zusammensetzungen wird lediglich allgemein beschrieben und kann unter anderem Latices, Kunststoffe und Beschichtungen betreffen.

Das Dokument WO 2011/150224 beschreibt antimikrobielle hochkonzentrierte wässrige Dispersion enthaltend ein Biozid und eine spezielle Tensid-Mischung, In der Liste der Biozide sind BIT, ZnPT und Folpet genannt, es wird jedoch keine Kombination der Wirkstoffe ZnPT und BIT oder aber ZnPT und Folpet beschrieben.

Das Dokument WO 2007/139950 beschreibt die antimikrobielle, synergistische Wirkung einer Kombination von Isothiazolin-3-on und Zinksalzen in Gewichtsverhältnis von Isothiazolin-3-on zu Zinksalz im Bereich 1:2000 bis 100:1. In Dokument WO 2012/130822 werden antimikrobielle Zusammensetzungen beschrieben, die ein Isothiazolin-3-on (insbesondere BIT), ein Zinksalz (insbesondere Zinkoxid) sowie ein Pyrithion (insbesondere ZnPT) und ein anionisches Tensid enthalten. Diese Zusammensetzungen werden zum Schutz vor dem Befall durch Mikroorganismen in Pigment-Dispersionen, wie z.B. Calciumcarbonat-Dispersionen, eingesetzt. Die Verwendung dieser antimikrobiellen Zusammensetzungen zur Ausrüstung von Polymermaterialien ist nicht beschrieben.

Eine antimikrobielle Zusammensetzung enthaltend ZnPT und BBIT in einem Verhältnis von 1:1 ist im Stand der Technik bekannt und als kommerzielles Produkt erhältlich (Vanquish SL, Lonza).

Auch US 2010/0240800 beschreibt Polymere, insbesondere Elastomere wie plastifiziertes PVC, Polyurethan und SBR-Latices, welche biozid ausgerüstet sind, wobei ZnPT und BBIT jeweils als bevorzugte Biozid-Wirkstoffe genannt sind. Das Dokument offenbart allerdings nicht die Kombination der beiden Wirkstoffe.

Die bekannten antimikrobiellen Formulierungen, welche die genannten antimikrobiellen Wirkstoffe oder Kombinationen enthalten, sind für die Anwendung in PVC-Formmassen noch nicht technisch befriedigend. Alle antimikrobiellen Wirkstoffe oder Wirkstoff-Kombination des Standes der Technik zeigen ungenügende Eigenschaften im Bezug auf einzelne Anforderungen. Oftmals sind hohe Einsatzkonzentrationen notwendig, um eine ausreichende oder gute Schimmelpilzbeständigkeit zu erhalten. Die Schimmelpilzbeständigkeit wird in der Regel der internationalen Norm ISO 846 A oder ISO 846 B bestimmt. Auch die Algen- und Flechten-Beständigkeit kann ungenügend sein.

So verlangen beispielsweise die antimikrobiellen Wirkstoffe 2-n-Butyl-1,2-benzisothiazolin-3-on (BBIT), N-(Trichlormethylthio)-phthalimid (Folpet) und 4,5-Dichlor-2-n-octyl-4-isothiazolin-3-on (DCOIT) eine hohe Einsatzkonzentration von über 1.500 bis 2.000 ppm im Trägermaterial um eine ausreichende Schimmelpilzbeständigkeit zu erreichen. Zudem neigen Polymerzusammensetzungen, die mit diesen Wirkstoffen ausgerüstet wurden, zu einer starken Vergilbung bei thermischer Belastung, z.B. beim Herstellprozess. Die mit ZnPT alleine erzielte antimikrobielle Wirkung ist ungenügend gegenüber bestimmten relevanten Pilzen, wie z. B. *Aspergillus niger.* Auch ist dieses Produkt alleine nicht ausreichend beständig bei UV-Bestrahlung. Auch die Kombination von ZnPT und BBIT im Verhältnis 1:1 (Produkt Vanquish SL 100, Lonza) führt beim Einsatz in PVC-Formmassen zu einer unerwünschten Vergilbung.

Eine Aufgabe der Erfindung ist es, mittels spezieller antimikrobieller Formulierungen alle gewünschten Eigenschaften bei der Ausrüstung von PVC-Zusammensetzungen (PVC-Polymermaterialien) zu erreichen.

Die Formulierungen bzw. die ausgerüsteten Polymermaterialien sollen folgende Vorteile kombinieren:
- Gute bis sehr gute antimikrobielle Wirkung, insbesondere antimykotische Wirkung, insbesondere gegenüber relevanten Pilzen, wie z.B. *Aspergillus niger,* bei üblichen Einsatzkonzentrationen, insbesondere unter 2.000 ppm (gute Effizienz der antimikrobiellen Wirkung).
- Gute bis sehr gute Beständigkeit der antimikrobiellen Wirkung gegenüber UV-Strahlung und gegen Wässerung (Auswaschen, geringe Migration der Wirkstoffe).
- Gute thermische Stabilität der PVC-Polymermaterialien, d.h. verminderte Vergilbung des PVC-Polymermaterials bei thermischer Belastung.

Es wurde überraschend gefunden, dass PVC-Polymermaterialien mit einer synergistischen Kombination von ZnPT und BBIT oder aber ZnPT und Folpet in einem speziellen synergistischen Gewichtsverhältnis von ZnPT zu BBIT oder aber ZnPT zu Folpet im Bereich von 1:4 bis 1:99, bevorzugt im Bereich von 1:5 bis 1:20, insbesondere bevorzugt im Bereich von 1:8 bis 1:10, ganz besonders bevorzugt von 1:9, vorteilhaft ausgerüstet werden können. Die mit den erfindungsgemäßen Formulierungen ausgerüsteten PVC-Formmassen zeigen eine deutlich geringere thermische Vergilbung und eine sehr gute antimikrobielle Wirkung sowie Beständigkeit der antimikrobiellen Wirkung. Es können somit mit den erfindungsgemäßen Formulierungen alle der oben genannten Anforderungen erfüllt werden. Die Formulierungen führen vorzugsweise zu einer synergistischen Wirkung der Komponenten.

Die vorliegende Erfindung betrifft eine Formulierung zur Ausrüstung von Polyvinylchlorid-Zusammensetzungen, wobei die Formulierung Zinkpyrithion (ZnPT) als ersten antimikrobiellen Wirkstoff W1 und 2-n-Butyl-1,2-benzisothiazolin-3-on (BBIT) oder N-(Trichlormethylthio)-phthalimid, als zweiten antimikrobiellen Wirkstoff W2, sowie optional eine oder mehrere weitere Komponente X enthält, wobei die antimikrobiellen Wirkstoffe W1 und W2 in einem Gewichtsverhältnis W1 zu W2 im Bereich von 1:4 bis 1:99, bevorzugt im Bereich von 1:5 bis 1:20, insbesondere bevorzugt im Bereich von 1:8 bis 1:10, ganz besonders bevorzugt von 1:9, vorliegen.

Insbesondere handelt es sich bei den Polyvinylchlorid-Zusammensetzungen um Polyvinylchlorid-Polymer-Materialien, insbesondere um Polyvinylchlorid-Formmassen oder Polyvinylchlorid-Formteile.

Die Kombination der Wirkstoffe W1 und W2 im erfindungsgemäßen Gewichtsverhältnis ermöglicht es überraschenderweise, PVC-Formmassen herzustellen, die eine gute bis sehr gute Temperaturbeständigkeit aufweisen, d.h. über einen möglichst langen Zeitraum eine Verarbeitungstemperatur von bis zu 190° C ohne Vergilbung überstehen. Dies ist beispielsweise beim Einsatz von Zinkpyrithion allein oder bei der Verwendung einer 1:1 Mischung aus ZnPT und BBIT nicht möglich.

Die beschriebenen Formulierungen dienen insbesondere zur antimikrobiellen Ausrüstung von PVC, vorzugsweise Weich-PVC. Die erfindungsgemäße Formulierung ist auch dadurch gekennzeichnet, dass ihre Komponenten in den PVC-Polymermaterialien, insbesondere Weich-PVC, synergistisch zusammenwirken. Sie können in geringeren Konzentrationen als im Falle der Einzelkomponenten zum Schutz gegen Befall und Zerstörung durch Mikroorganismen verwendet werden.

Einige der vorteilhaften Eigenschaften der erfindungsgemäßen Formulierungen, die sich insbesondere als Konservierungsmittel für PVC-Polymermaterialien eignen, lassen sich wie folgt zusammenfassen:
- gute bis sehr gute antimikrobielle Wirkung bei geringer/üblicher Konzentration
- gute antimykotische Wirkung, insbesondere gegenüber dem Pilz *Aspergillus niger*
- gute Beständigkeit der antimikrobiellen Wirkung bei Belastung durch UV-Licht und bei hoher Auswaschbelastung (geringe Migration der Wirkstoffe)
- hohe Beständigkeit gegenüber Vergilben bei thermischer Belastung, insbesondere bei Temperaturen über 150 °C, insbesondere über 180 °C, insbesondere bei 190°C
- geringe Toxizität gegenüber Säugetieren, niedriger Dampfdruck der Wirkstoffe, günstiges Verhältnis von Preis und Leistung.

Im Sinne der vorliegenden Erfindung umfasst der Begriff Polymermaterialen thermoplastische Formmassen und daraus hergestellte Formteile, wie z.B. Folien, oder Beschichtungen. Polyvinylchlorid-Polymermaterialen im Sinne der vorliegenden Erfindung meint, dass es sich um Polymermaterialien handelt, die zu mindestens 30 Gew.-%, insbesondere mindestens 40 Gew.-%, bevorzugt mindestens 50 Gew.%, bezogen auf die Gesamtmenge an Polymermaterial (Formmasse oder Formteil), Polyvinylchlorid enthalten.

Insbesondere enthalten die thermoplastischen Formmassen mindestens 80 Gew.-%, bevorzugt mindestens 90 Gew.-%, bezogen auf die Gesamtmenge an Polymer im Polymermaterial, Polyvinylchlorid, bevorzugt Polyvinylchlorid-Homopolymer. Insbesondere betrifft die vorliegende Erfindung die Ausrüstung von Weich-PVC (PVC-P). Unter Weich-PVC versteht der Fachmann plastifiziertes Polyvinylchlorid.

Weich-PVC wird üblicherweise durch Gelieren eines so genannten Plastisols auf einem Träger bei Temperaturen im Bereich von 160 bis 200 °C hergestellt, wobei sich eine homogene Mischung aus der ursprünglichen Dispersion bildet. Beim Abkühlen erstarrt die Mischung zu einem Festkörper, der von dem Träger abgezogen werden kann oder aber als Beschichtung auf diesem verbleiben kann. Der Begriff Plastisol ist dem Fachmann bekannt und bezeichnet insbesondere eine Dispersion von pulverförmigen thermoplastischem PVC in einem oder mehreren Weichmachern und gegebenenfalls weiteren Additiven. Die Verfahren zur Herstellung von Weich-PVC sind dem Fachmann bekannt und werden beispielsweise im Kunststoff-Handbuch, Polyvinylchlorid, Band 2, Hrgs. H.K. Felger, ISBN 3-446-14360-2, 1986, Seiten 1077 bis 1116 beschrieben.

Antimikrobielle Wirkung umfasst im Sinne der vorliegenden Erfindung die reduzierende, abtötende oder inaktivierende Wirkung gegenüber Mikroorganismen, wie Bakterien, Pilzen, Hefen und Algen. Antimykotische Wirkung oder antimykotischer Wirkstoff meint im Sinne der Erfindung die Wirkungen gegen Pilze, bzw. einen Wirkstoff, der gegen Pilze, insbesondere Schimmelpilze, wirkt. Eine antimykotische Wirkung im Sinne der vorliegenden Erfindung umfasst eine fungizide Wirkung (d.h. eine abtötende Wirkung gegenüber Pilzen) und eine fungi-statische Wirkung (d.h. eine vermehrungshemmende Wirkung gegenüber Pilzen).

Bevorzugt enthält die erfindungsgemäße Formulierung als antimikrobielle Wirkstoffe ausschließlich die Wirkstoffe W1 und W2 in dem angegebenen Mengenverhältnis. Bevorzugt enthält die erfindungsgemäße Formulierung ausschließlich Zinkpyrithion (ZnPT) und 2-n-Butyl-1,2-benzisothiazolin-3-on (BBIT) oder ausschließlich Zinkpyrithion (ZnPT) und N-(Trichlormethylthio) phthalimid (Folpet).

Die Komponente Zinkpyrithion (ZnPT), Zink-2-mercaptopyridin-N-oxid, hat folgende chemische Struktur:

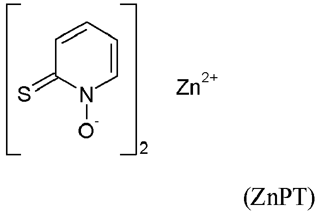

Dem Fachmann ist bekannt, dass Zinkpyrithion auch in Form eines Chelat-Komplexes Zn(PT)₂ vorliegen kann.

Die Komponente 2-n-Butyl-1,2-benzisothiazolin-3-on (BBIT) hat folgende chemische Struktur:

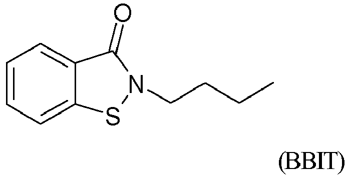

Die Komponente N-(Trichlormethylthio)phthalimid (Folpet) hat folgende chemische Struktur:

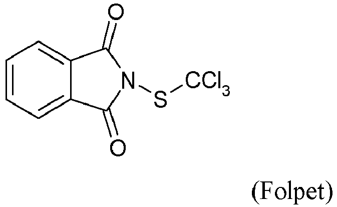

Erfindungsgemäß liegt das Gewichtsverhältnis der antimikrobiellen Wirkstoffe W1 zu W2 im Bereich von 1:4 bis 1:99, bevorzugt im Bereich von 1:5 bis 1:20, insbesondere bevorzugt im Bereich von 1:8 bis 1:10, ganz besonders bevorzugt bei 1:9.

Die Erfindung betrifft auch eine Formulierung, die Zinkpyrithion (ZnPT) als ersten antimikrobiellen Wirkstoff in einer Menge von 1 bis 20 Gew.-%, bezogen auf die gesamte Formulierung, und den zweiten antimikrobiellen Wirkstoff W2 in einer Menge von 8 bis 99 Gew.-% bezogen auf die gesamte Formulierung, enthält.

In einer besonderen Ausführungsform betrifft die Erfindung eine Formulierung zur Ausrüstung von Polyvinylchlorid-Zusammensetzungen, wobei die Formulierung Zinkpyrithion (ZnPT) als ersten antimikrobiellen Wirkstoff W1 und 2-n-Butyl-1,2-benzisothiazolin-3-on (BBIT) als zweiten antimikrobiellen Wirkstoff W2 enthält, wobei ZnPT und BBIT in einem Gewichtsverhältnis im Bereich von 1:4 bis 1:99, bevorzugt im Bereich von 1:5 bis 1:20, insbesondere bevorzugt im Bereich von 1:8 bis 1:10, ganz besonders bevorzugt von 1:9, vorliegen.

In einer besonderen Ausführungsform betrifft die Erfindung eine Formulierung zur Ausrüstung von Polyvinylchlorid-Zusammensetzungen, wobei die Formulierung Zinkpyrithion (ZnPT) als ersten antimikrobiellen Wirkstoff W1 und N-(Trichlormethylthio)-phthalimid (Folpet) als zweiten antimikrobiellen Wirkstoff W2 enthält, wobei ZnPT und Folpet in einem Gewichtsverhältnis im Bereich von 1:4 bis 1:99, bevorzugt im Bereich von 1:5 bis 1:20, insbesondere bevorzugt im Bereich von 1:8 bis 1:10, ganz besonders bevorzugt von 1:9, vorliegen.

Die Formulierung kann auch eine Kombination der drei antimikrobiellen Wirkstoffe ZnPT, BBIT und Folpet enthalten. Insbesondere kann die Formulierung Zinkpyrithion (ZnPT) als ersten antimikrobiellen Wirkstoff W1, 2-n-Butyl-1,2-benzisothiazolin-3-on (BBIT) als zweiten antimikrobiellen Wirkstoff W2 und N-(Trichlormethylthio)-phthalimid (Folpet) als einen weiteren antimikrobiellen Wirkstoffe enthalten, wobei die antimikrobiellen Wirkstoffe W1 und W2 in dem angegebenen Gewichtsverhältnis W1 zu W2 vorliegen. Insbesondere kann die Formulierung Zinkpyrithion (ZnPT) als ersten antimikrobiellen Wirkstoff W1, N-(Trichlormethylthio)-phthalimid (Folpet) als zweiten antimikrobiellen Wirkstoff W2 und 2-n-Butyl-1,2-benzisothiazolin-3-on (BBIT) als einen weiteren antimikrobiellen Wirkstoff enthalten, wobei die antimikrobiellen Wirkstoffe W1 und W2 in dem angegebenen Gewichtsverhältnis W1 zu W2 vorliegen.

Besonders bevorzugt ist ein synergistisches Gewichtsverhältnis von W1 zu W2 von 1:9. Die vorliegende Erfindung betrifft daher eine Formulierung enthalten Zinkpyrithion (ZnPT) als ersten antimikrobiellen Wirkstoff W1 und 2-n-Butyl-1,2-benzisothiazolin-3-on (BBIT) als zweiten antimikrobiellen Wirkstoff W2 in einem synergistischen Gewichtsverhältnis W1 zu W2 von 1:9 oder Formulierungen enthaltend Zinkpyrithion (ZnPT) als ersten antimikrobiellen Wirkstoff W1 und N-(Trichlormethylthio)-phthalimid (Folpet) als zweiten antimikrobiellen Wirkstoff W2 in einem synergistischen Gewichtsverhältnis W 1 zu W2 von 1:9.

Die vorliegende Erfindung betrifft insbesondere eine oben beschriebenen Formulierung zur Ausrüstung von Polyvinylchlorid-Zusammensetzungen (Polyvinylchlorid-Polymermaterialien), wobei die Menge der antimikrobiellen Wirkstoffe W1 und W2 zusammen (d.h. W1 + W2) im Bereich von 10 bis 40 Gew.-%, bevorzugt von 15 bis 30 Gew.-%, insbesondere bevorzugt von 20 bis 30 Gew.%, bezogen auf die gesamte Formulierung, liegt.

Die vorliegende Erfindung betrifft insbesondere eine oben beschriebenen Formulierung zur Ausrüstung von Polyvinylchlorid-Zusammensetzungen (Polyvinylchlorid-Polymermaterialien), wobei die Formulierung Zinkpyrithion (ZnPT) als ersten antimikrobiellen Wirkstoff in einer Menge von 1 bis 7 Gew.-%, bevorzugt von 1 bis 4 Gew.-%, besonders bevorzugt von 1,5 bis 3 Gew.-%, bezogen auf die gesamte Formulierung, und den zweiten antimikrobiellen Wirkstoff W2 in einer Menge von 8 bis 38 Gew.-%, insbesondere 9 bis 25 Gew.-%, besonders bevorzugt von 15 bis 25 Gew.-% bezogen auf die gesamte Formulierung, enthält. Bevorzugt enthält die antimikrobielle Formulierung in dieser Ausführungsform 60 bis 90 Gew.-%, bevorzugt 70 bis 85 Gew.-% mindestens einer weiteren Komponente X (wie unten beschrieben).

In einer anderen Ausführungsform kann die antimikrobielle Formulierung in fester Form vorliegen und den ersten antimikrobiellen Wirkstoff W1 in einer Menge von 1 bis 20 Gew.-%, insbesondere 1 bis 7 Gew.-%, bezogen auf die gesamte Formulierung, und den zweiten antimikrobiellen Wirkstoff W2 in einer Menge von 8 bis 99 Gew.-%, insbesondere 8 bis 38 Gew.-%, bezogen auf die gesamte Formulierung, sowie optional eine weitere Komponente X (insbesondere in fester Form) in einer Menge von 0 bis 91 Gew.-%, bevorzugt von 60 bis 90 Gew.-%, enthalten, wobei die antimikrobiellen Wirkstoffe W1 und W2 in einem Gewichtsverhältnis W1 zu W2 im Bereich von 1:4 bis 1:99, bevorzugt im Bereich von 1:5 bis 1:20, insbesondere bevorzugt im Bereich von 1:8 bis 1:10, ganz besonders bevorzugt von 1:9 vorliegen.

Bevorzugt kann ein pulverförmiges PVC-Polymer als weitere feste Komponente eingesetzt werden. Bevorzugt betrifft diese Ausführungsform eine antimikrobielle Formulierung zum Ausrüsten von PVC-Zusammensetzungen enthaltend (insbesondere bestehend aus) 10 bis 40 Gew.-% an antimikrobiellen Wirkstoffen W1 und W2 zusammen und 60 bis 90 Gew.-% eines pulverförmigen Polyvinylchlorids.

Bevorzugt betrifft diese Ausführungsform eine antimikrobielle Formulierung zum Ausrüsten von PVC-Zusammensetzungen enthaltend (insbesondere bestehend aus):
1 bis 7 Gew.-%, bevorzugt 1 bis 4 Gew.-%, besonders bevorzugt von 1,5 bis 3 Gew.-%, Zinkpyrithion (ZnPT);
8 bis 38 Gew.-%, bevorzugt 9 bis 25 Gew.-%, besonders bevorzugt von 15 bis 25 Gew.-%, 2-n-Butyl-1,2-benzisothiazolin-3-on (BBIT) oder N-(Trichlormethylthio)-phthalimid (Folpet);
55 bis 91 Gew.-%, bevorzugt 60 bis 85 Gew.-%, besonders bevorzugt von 70 bis 85 Gew.-% pulverförmiges Polyvinylchlorid, insbesondere ein pulverförmiges Polyvinylchlorid-Homopolymer ausgewählt aus S-PVC, E-PVC und M-PVC, besonders bevorzugt E-PVC.

Alle obigen Angaben in Gew.-% beziehen sich auf die gesamte antimikrobielle Formulierung.

Optional kann die erfindungsgemäße Formulierung mindestens eine weitere Komponente X in einer Menge von 20 bis 90 Gew.-%, bevorzugt von 40 bis 90 Gew.-%, insbesondere bevorzugt von 60 bis 90 Gew.-%, besonders bevorzugt von 70 bis 80 Gew.-%, bezogen auf die gesamte Formulierung, enthalten. Als weitere Komponente können insbesondere Verdickungsmittel (z.B. PVC bzw. PVC-Pulver), Entschäumungsmitteln, pH-Wert-Regulatoren, Dispergier-Hilfsmitteln, Weichmacher und/oder Stabilisatoren eingesetzt werden.

Bevorzugt sind Formulierungen, die als weitere Komponente X mindestens einen Weichmacher enthalten. Als Weichmacher kann ein bekannter Weichmacher für PVC-Formmassen eingesetzt werden. Bevorzugt kann der Weichmacher ausgewählt werden aus der unten beschriebenen Liste betreffend Weichmacher für die erfindungsgemäße PVC-Formmasse. Insbesondere bevorzugt wird 1,2-Cyclohexandicarbonsäurediisononylester (Hexamoll, DINCH) in der antimikrobiellen Formulierung eingesetzt. Bevorzugt enthält die antimikrobielle Formulierung 40 bis 60 Gew.-%, besonderes bevorzugt 40 bis 50 Gew.-%, bezogen auf die gesamte Formulierung, mindestens einen Weichmachers als weitere Komponente X.

Bevorzugt sind zudem Formulierungen, die als weitere Komponente X mindestens einen Verdicker, insbesondere PVC und/oder PVC-Pulver enthalten. Bevorzugt enthält die Formulierung ein pulverförmiges PVC als weitere Komponente X. Bevorzugt enthält die Formulierung 20 bis 40 Gew.-%, insbesondere bevorzugt 30 bis 40 Gew.-%, bezogen auf die gesamte Formulierung, pulverförmiges PVC, insbesondere ein pulverförmiges Polyvinylchlorid-Homopolymer ausgewählt aus S-PVC, E-PVC und M-PVC, bevorzugt ein E-PVC als weitere Komponente X.

Dem Fachmann sind gängige Typen von pulverförmigem PVC (PVC-Pulver) bekannt. Diese sind beispielsweise in "PVC-Stabilisatoren", M. Schiller, ISBN 978-3-446-41910-0, 2010, Seiten 1 bis 4 und "Kunststoffchemie für Ingenieure", W. Kaiser, ISBN 978-3-446-41325-2, 2007, Seiten 266 bis 269 beschrieben. Typischerweise unterscheidet man nach Art der Herstellung E-PVC (Emulsions-PVC), S-PVC (Suspensions-PVC) und M-PVC (Masse-PVC). Emulsions-PVC wird mittels eines Emulsionspolymerisation-Verfahrens hergestellt und weist typischerweise Korngrößen im Bereich von 0,1 bis 2 µm auf. Suspensions-PVC wird mittels eines Suspensionspolymerisation-Verfahrens hergestellt und weist typischerweise Korngrößen im Bereich von 0,02 bis 2 mm auf. Masse-PVC wird mittels eines Massepolymerisation-Verfahrens hergestellt und weist typischerweise Korngrößen im Bereich von 0,06 bis 0,75 mm auf. Im Sinne der vorliegenden Erfindung meint pulverförmiges PVC (PVC-Pulver) insbesondere ein Polymer basierend auf Polyvinylchlorid mit einer Korngröße im Bereich von 0,1 bis 1000 µm, bevorzugt 0,1 bis 10 µm.

Damit die antimikrobielle Formulierung besser in PVC-Formmasse eingearbeitet werden kann, können die Wirkstoffe W1 und W2 durch Zugabe eines typischen Weichmachers für PVC-Formmassen oder durch Zugabe eines Weichmachers und eines PVC-Pulvers formuliert werden. Bevorzugt liegt die erfindungsgemäße antimikrobielle Formulierung in Form eines Plastisols vor enthaltend pulverförmiges PVC, mindestens einen Weichmacher und die Wirkstoffe W1 und W2. Somit können Formulierungen bereitgestellt werden, die gieß-, spritz und streichfähig sind, leicht zu dosieren sind und/oder lange haltbar sind. Bevorzugt sind daher Formulierungen, die 40 bis 60 Gew.-%, bevorzugt 40 bis 50 Gew.-%, bezogen auf die gesamte Formulierung, mindestens eines Weichmachers, und 20 bis 40 Gew.-%, bevorzugt 30 bis 40 Gew.-%, bezogen auf die gesamte Formulierung, mindestens eines Verdickers, insbesondere pulverförmiges PVC, insbesondere pulverförmiges PVC-Homopolymer als weitere Komponenten X, enthalten.

Die erfindungsgemäße Formulierung kann zusätzlich zu den antimikrobiellen Wirkstoffen W1 und W2 im Prinzip auch einen oder mehrere andere antimikrobielle Wirkstoffe enthalten, die in Abhängigkeit vom speziellen zu konservierenden System ausgewählt werden. Eine typische Einsatzmenge für den zusätzlichen antimikrobiellen Wirkstoff ist beispielsweise 0 bis 5 Gew.-%, insbesondere 0,1 bis 5 Gew.-% (bezogen auf die gesamte Formulierung).

Beispiele für solche anderen Wirkstoffe sind nachfolgend angegeben:
Triazole, wie Amitrol, Azocyclotin, BAS 480F, Bitertanol, Difenoconazol, Fenbuconazol, Fenchlorazol, Fenethanil, Fluquinconazol, Flusilazol, Flutriafol, Imibenconazol, Isozofos, Myclobutanil, Metconazol, Epoxyconazol, Paclobutrazol, Penconazol, Propioconazol, (+/)-cis-1-(4-Chlorphenyl)-2-(1H-1,2,4- triazol-1-yl)-cycloheptanol, Tetraconazol, Triadimefon, Triadimenol, Triapenthenol, Triflumizol, Triconazol und Uniconazol sowie die Metallsalze und Säureaddukte dieser Triazole;
Imidazole, wie Imazalil, Pefurazoat, Prochloraz, Triflumizol und 2-(1-t-Butyl)-1-(2-chlorphenyl)-3-(1,2,4-triazol-1-yl)-propan-2-ol sowie die Metallsalze und Säureaddukte dieser Imidazole;
Thiazolcarboxanilide, wie 2',6'-Dibrom-2-methyl-4-trifluormethoxy-4'-trifluormethyl-1,3-thiazol-5-carboxanilide, und die Metallsalze und Säureaddukte dieser Thiazolcarboxanilide;
Methyl-(E)-2- 2-[6-(2-cyanophenoxy)-pyrimidin-4-yloxy]-phenyl- 3-methoxyacrylat, Methyl-(E)-2- 2-[6-(2-thioamidophenoxy)-pyrimidin-4-yloxy]-phenyl-3-methoxyacrylat, Methyl-(E)-2- 2-[6-(2- fluorphenoxy)-pyrimidin-4-yloxy]-phenyl-3-methoxyacrylat, Methyl-(E)-2- 2-(6-(2,6-difluorphenoxy)-pyrimidin-4-yloxy]-phenyl-3-methoxyacrylat, Methyl-(E)-2- 2-[3-(pyrimidin-2-yloxy)- phenoxy]-phenyl-3-methoxyacrylat, Methyl-(E)-2- 2-[3-(5-methylpyrimidin-2-yloxy)-phenoxy]-phenyl-3-methoxyacrylat, Methyl-(E)-2- 2-[3-(phenylsulfonyloxy)-phenoxy-]-phenyl-3-methoxyacrylat, Methyl-(E)-2- 2-(3-(4-nitrophenoxy)-phenoxy]-phenyl-3-methoxyacrylat, Methyl-(E)-2-(2-phenoxyphenyl)-3-methoxyacrylat, Methyl-(E)-2-[2-(3,5-dimethylbenzoyl)-pyrrol-1-yl]- 3-methoxyacrylat, Methyl-(E)-2-[2-(3-methoxyphenoxy)-phenyl]-3- methoxyacrylat, Methyl-(E)-2-[2-(2-phenylethen-1-yl)-phenyl]-3- methoxyacrylat, Methyl-(E)-2-[2-(3,5-dichlorphenoxy)-pyridin-3- yl]-3-methoxyacrylat, Methyl-(E)-2- 2-[3-(1,1,2,2-tetrafluorethoxy)-phenoxy]-phenyl-3-methoxyacrylat, Methyl-(E)-2- 2-[3- alpha -hydroxybenzyl)-phenoxy]-phenyl -3-methoxyacrylat, Methyl- (E)-2-[2-(4-phenoxypyridin-2-yloxy)-phenyl] -3-methoxyacrylat, Methyl-(E)-2-[2-(3-n-propyloxyphenoxy)-phenyl]-3-methoxyacrylat, Methyl-(E)-2-[2-(3-isopropyloxyphenoxy)-phenyl]-3-methoxyacrylat, Methyl-(E)-2- 2-[3-(2-fluorphenoxy)-phenoxy]- phenyl- 3-methoxyacrylat, Methyl-(E)-2-[2-(3-ethoxyphenoxy)-phenyl]-3-methoxyacrylat, Methyl-(E)-2-[2-(4-t-butylpyridin-2-yloxy)-phenyl]-3-methoxyacrylat, Methyl-(E)-2- 2-[3-(3-cyanophenoxy)- phenoxy]-phenyl-3-methoxyacrylat, Methyl-(E)-2-[2-(3-methylpyridin-2-yloxymethyl)-phenyl]-3-methoxyacrylat, Methyl-(E)-2- 2-[6-(2-methylphenoxy)-pyrimidin-4-yloxy]-phenyl-3-methoxyacrylat, Methyl-(E)-2-[2-(5-brompyridin-2-yloxymethyl)-phenyl]- 3-methoxyacrylat, Methyl-(E)-2- 2-[3-(3-iodpyridin-2-yloxy)- phenoxy]-phenyl-3-methoxyacrylat, Methyl-(E)-2- 2-[6-(2-chlorpyridin-3-yloxy)-pyrimidin-4-yloxy]-phenyl-3-methoxyacrylat, (E),(E)-Methyl-2-[2-(5,6-dimethylpyrazin-2-ylmethyloximinomethyl)-phenyl]-3-methoxyacrylat, (E)-Methyl-2-2-[6-(6-methylpyridin-2-yloxy)-pyrimidin-4-yloxy]-phenyl)-3-methoxyacrylat, (E),(E)-Methyl-2- 2-[(3-methoxyphenyl)-methyloximinomethyl]- phenyl-3-methoxyacrylat, (E)-Methyl-2- 2-[6-(2-azidophenoxy)- pyrimidin-4-yloxy]-phenyl-3-methoxyacrylat, (E),(E)-Methyl-2- 2-[6-(phenylpyrimidin-4-yl)-methyloximinomethyl]-phenyl-3- methoxyacrylat, (E),(E)-Methyl-2- 2-[(4-chlorphenyl)-methyloximinomethyl]-phenyl-3-methoxyacrylat, (E)-Methyl-2- 2-[6-(2-n- propylphenoxy)-1,3,5-triazin-4-yloxy]-phenyl-3-methoxyacrylat, (E),(E)-Methyl-2- 2-[(3-nitrophenyl)-methyloximinomethyl]- phenyl-3-methoxyacrylat;
Succinatdehydrogenaseinhibitoren, wie Fenfuram, Furcarbonil, Cyclafluramid, Furmecyclox, Seedvax, Metsulfovax, Pyrocarbolid, Oxycarboxin, Shirlan, Mebenil (Mepronil), Benodanil und Flutolanil (Moncut);Naphthalinderivate, wie Terbinafin, Naftifin, Butenafin, 3- Chlor-7-(2-aza-2,7,7-trimethyloct-3-en-5-in);
Sulfenamide, wie Dichlofluanid, Tolyfluanid, und Fluorfolpet;Captan, Captofol;Benzimidazole, wie Carbendazim, Benomyl, Furathiocarb, Fuberidazol, Thiophonatmethyl und Thiabendazol sowie Salze hiervon;
Morpholinderivate, wie Tridemorph, Fenpropimorph, Falimorph, Dimethomorph, Dodemorph, Aldimorph und Fenpropidin sowie Salze hiervon mit Arylsulfonsäuren, z. B. mit p-Toluolsulfonsäure und p-Dodecylphenylsulfonsäure;
Dithiocarbamate, Cufraneb, Ferbam, Mancopper, Mancozeb, Maneb, Metam, Metiram, Thiramzeneb, Ziram;
Benzothiazole, wie 2-Mercaptobenzothiazole; Benzamide, wie 2,6-Dichlor-N-(4-trifluormethylbenzyl)-benzamide;
Borverbindungen, wie Borsäure, Borsäureester und Borax;
Formaldehyd und Formaldehyd-Donorverbindungen, wie Benzylalkoholmono-(poly)-hemiformal, Oxazolidine, Hexahydro-S-triazine, N-Methylolchloracetamid, Paraformadehyd, Nitropyrin, Oxolinsäure, Tecloftalam;
Biguanide, wie Polyhexamethylenbiguanid; Tris-N-(cyclohexyldiazeniumdioxy)-aluminium, N-(Cyclohexyldiazeniumdioxy)-tributylzinn und Kaliumsalze hiervon, Bis-N-(cyclohexyldiazeniumdioxy)-kupfer;
Aldehyde, wie Zimtaldehyd, Glutaraldehyd und beta -Bromzimtaldehyd;Thiocyanate, wie Thiocyanatomethylthiobenzothiazol und Methylenbisthiocyanat;
quartäre Ammoniumverbindungen, wie Benzyldimethyltetradecylammoniumchlorid, Benzyldimethyldodecylammoniumchlorid und Di- decyldimethylammoniumchlorid;
lodderivative, wie Diiodmethyl-p-tolylsulfon, 3-Iod-2-propinylalkohol, 4-Chlorphenyl-3-iodpropargylformal, 3-Brom-2, 3-diiod- 2-propenylethylcarbamat, 2,3,3-Triiodallylalkohol, 3-Brom-2,3- diiod-2-propenylalkohol;
Phenolderivative, wie Tribromphenol, Tetrachlorphenol, 3- Methyl-4-chlorphenol, 3,5-Dimethyl-4-chlorphenol, Phenoxyethanol, Dichlorphen, o-Phenylphenol, m-Phenylphenol, p-Phenylphenol und 2-Benzyl-4-chlorphenol sowie die Alkali- und Erdalkalimetallsalze dieser Phenolderivate;
Biozide mit einem aktivierten Halogenatom, wie Chloracetamide, Bronopol und Bronidox; Tectamere, wie 2-Brom-2-nitro-1,3-propandiol, 2-Brom-4'-hydroxyacetophenon, 2,2-Dibrom-3-nitrilpropionamid, 1,2-Dibrom-2,4- dicyanobutan und beta -Brom- beta - nitrostyrol;Tetrachlor-4-methylsulfonylpyridin, Pyrimethanol, Mepanipyrim, Dipyrithion;
Metallseifen, wie Zinn-, Kupfer- und Zinknaphthenat, -octoat, - 2-ethylhexanoat, -oleat, - phosphat und -benzoat;Metallsalze, wie Kupferhydroxycarbonat, Natriumdichromat, Kaliumdichromat, Kaliumchromat, Kupfersulfat, Kupferchlorid, Kupferborat, Zinkfluorsilicat, Kupferfluorsilicat;
Oxide, wie Tributylzinnoxid, Cu₂O, CuO, ZnO;
Dialkyldithiocarbamate, wie Natrium- und Zinksalze von Dialkyldithiocarbamaten, Tetramethylthiuramdisulfid und Kalium-N- methyldithiocarbamat;
Nitrile, wie 2,4,5,6-Tetrachlorisophthalodinitril, Dinatriumcyanodithioimidocarbamat;
Chinoline, wie 8-Hydroxychinoline und seine Kupfersalze;Mucochlorsäure, 5-Hyroxy-2-(5H)-furanon;4,5-Dichlordithiazolinon, 4,5-Benzodithiazolinon, 4,5-Trimethylendithiazolinon; 4,5-Dichlor-(3H)-1,2-dithiol-3-on, 3,5-Dimethyltetrahydro- 1,3,5-thiadiazin-2-thion, N-(2-p-Chlorbenzoylethyl)-hexaminiumchlorid, Kalium-N-hydroxymethyl-Nmethyldithiocarbamat;2-Oxo-2-(4-hydroxyphenyl)-acethydroximinsäurechlorid;Phenyl-(2-chlorcyanovinyl)-sulfon, Phenyl-1,2-dichlor-2-cyanovinylsulfon;
silber-, zink- oder kupferhaltige Zeolithe, allein oder eingeschlossen in polymeren aktiven Bestandteilen;
Algicide, wie Kupfersulfat, Dichlorophen, Endothal, Fentinacetat und Chinoclamin,
Herbizide, wie Acetochlor, Acifluorfen, Aclonifen, Acrolein, Alachlor, Alloxydim, Ametryn, Amidosulfuron, Amitrol, Ammoniumsulfat, Anilofos, Asulam, Atrazin, Aziprotryn, Benazolin, Benfluralin, Benfuresat, Bensulfuron, Bensulid, Bentazon, Chloridazon, Chlorimuron, Chlormethoxyfen, Chlornitrofen, Chloressigsäure, Chlorpikrin, Chlortoluron, Chlorxuron, Chlorprepham, Chlorsulfuron, Chlorthal, Chlorthiamid, Cinmethylin, Cinofulfuron, Clethodim, Clomazon, Clomeprop, Clopyralid, Cyanamid, Cyanazin, Cycloat, Cycloxydim, Benzofencap, Benzthiazuron, Bifenox, Bilanafos, Borax, Bromacil, Brombutid, Bromfenoxim, Bromxynil, Butachlor, Butamifos, Butanachlor, Butralin, Butylat, Carbetamid, Chloramben, Chlorbromuron, Chlorbufam, Chlorflurenol, Difenoxuron, Difenzoquat, Diflufenican, Dimefuron, Dimepiperat, Dimethachlor, Dimethametryn, Dimethipin, Dimethylarsinsäure, Dinitramin, Dinosebacetat, Dinoseb, Dinoterb, Diphenamid, Dipropetryn, Diquat, Dithiopyr, Diuron, Daimuron, Dalapon, Dazomet, Desmedipham, Desmetryn, Dicamba, Dichlobenil, Dichlorprop, Dichlorprop-P, Diclofop, Diethatyl, Flamprop-M, Flazasulfuron, Fluazifop, Fluazifop-P, Fluchloralin, Flumeturon, Fluorglycofen, Fluornitrofen, Flupropanat, Flurenol, Fluridon, Flurochloridon, Fluroxypyr, Fomosafen, Fusamin, Furyloxyfen, Glufosinat, Glyphosat, Haloxyfop, Hexazinon, Imazamethabenz, Imazapyr, Imazaquin, Imazethapyr, Ioxynil, Isopropalin, Isoproturon, Isouron, Isoxaben, Isoxapyrifop, Lactofen, Lenacil, Linuron, MCPA, Pebulat, Pendimethalin, Pentachlorphenol, Pentanochlor, Phenmedipham, Picloram, Piperophos, Pretilachlor, Primisulfuron, Prodiamin, Proglinazin, Prometon, Prometryn, Propachlor, Propanil, Propaquizafop, Propazin, Propham, Propyzamid, Prosulfocarb, Pyrazolynat, Pyrazosulfuron, Pyrazoxyfen, Pyributicarb, Pyridat, Quinclorac, Quinmerac, Quinoclamin, Quizalofop, Quizalofop-P, Eglinazin, Endothal, Epsorcarb, Ethalfluralin, Ethidimuron, Ethofumesat, Fenoxaprop, Fenoxaprop-P, Fenuron, Flamprop, Irgarol 1051, MCPAthioethyl, Mecoprop, Mecoprop-P, Mefenacet, Mefluidid, Metam, Metamitron, Metazachlor, Methabenzthiazuron, Methazol, Methoprotryn, Methyldymron, Methylisothiocyanat, Metobromuron, Metolachlor, Metoxuron, Metribzin, Metsulfuron, Molinat, Monoalid, Monolinuron, Naproanilid, Napropamid, Naptalam, Neburon, Nicosulfuron, Nipyraclofen, Norflurazon, Orbencarb, Oryzalin, Oxadiazon, Oxyfluorfen, Paraquat, Prometryn, Simetryn, Sulfometuron, Tebutam, Tebuthiuron, Terbacil, Terbumeton, Terbuthylazin, Terbutryn, Thiazafluron, Thifensulfuron, Thiobencarb, Thiocarbazil, Tioclorim, Tralkoxydim, Triallat, Triasulfuron, Tribenzuron, Triclopyr, Tridiphan, Trietazin, Trifluralin und Vernolat.

Zur Anwendung gelangt jedoch vorzugsweise eine Formulierung, die außer den beiden antimikrobiellen Wirkstoffen W 1 und W2 keinen weiteren Wirkstoff, insbesondere keinen in der oberen Liste genannten Wirkstoff, enthält.

In einer bevorzugten Ausführungsform betrifft die vorliegende Erfindung eine antimikrobielle Formulierung enthaltend die folgenden Komponenten (bevorzugt bestehend aus den folgenden Komponenten):
1 bis 7 Gew.-%, bevorzugt 1 bis 4 Gew.-%, besonders bevorzugt von 1,5 bis 3 Gew.-%, Zinkpyrithion (ZnPT);
8 bis 38 Gew.-%, insbesondere 10 bis 25 Gew.-%, besonders bevorzugt von 15 bis 25 Gew.-%, 2-n-Butyl-1,2-benzisothiazolin-3-on (BBIT) oder N-(Trichlormethylthio)-phthalimid (Folpet);
40 bis 60 Gew.-%, bevorzugt 40 bis 50 Gew.-%, mindestens eines Weichmachers, insbesondere ausgewählt aus der Gruppe bestehen aus Di-n-Butylphthalat (DBP), Dioctylphtalat (DOP), Butylbenzylphthalat (BBP), Diisobutylphthalate (DIPB), Diethylphthalat (DEP), Di- (2-ethylhexyl)-phthalat (DEHP), Diisononylphthalat (DINP), Di(2-Propyl-heptyl)phthalate (DPHP), Diisoundecylphthalate (DIUP), Diisodecylphthalat (DIDP), 1,2-Cyclohexandicarbonsäurediisononylester (Hexamoll DINCH), acetyliertem Castoröl, Diester von Isosorbid und Fettsäuren, Mischung aus epoxidiertem Sojamethylester (ESBO) und N,N-Diethylhydroxylamine (DEHA), epoxidiertem Sojamethylester, epoxidiertem Sojaamylester, epoxidiertem Sojahexylester; epoxidiertem Sojaoctylester, Di-Capryl-Sebacin und Triethyl-Citrat;
20 bis 40 Gew.-%, bevorzugt 30 bis 40 Gew.-%, pulverförmiges Polyvinylchlorid, insbesondere ein pulverförmiges Polyvinylchlorid-Homopolymer ausgewählt aus S-PVC, E-PVC und M-PVC, insbesondere bevorzugt E-PVC.

Erfindungsgemäß liegen die antimikrobiellen Wirkstoffe W 1 und W2 in der oben beschriebenen Formulierung in einem Gewichtsverhältnis W1 zu W2 im Bereich von 1:4 bis 1:99, bevorzugt im Bereich von 1:5 bis 1:20, insbesondere bevorzugt im Bereich von 1:8 bis 1:10, ganz besonders bevorzugt von 1:9 vor.

Alle obigen Angaben in Gew.-% beziehen sich auf die gesamte antimikrobielle Formulierung. In einer bevorzugten Ausführungsform ergeben die oben genannten Mengen an W1, W2, Weichmacher und Polyvinylchlorid 100 Gew.-%.

Insbesondere betrifft die Erfindung eine antimikrobielle Formulierung, die in Form eines Plastisols vorliegt und die folgenden Komponenten enthält (bevorzugt aus den folgenden Komponenten besteht):
1,5 bis 3 Gew.-% Zinkpyrithion (ZnPT);
15 bis 25 Gew.-% 2-n-Butyl-1,2-benzisothiazolin-3-on (BBIT) oder N-(Trichlormethylthio)phthalimid (Folpet);
40 bis 50 Gew.-%, mindestens eines Weichmachers, insbesondere ausgewählt aus der Gruppe bestehen aus Di-n-Butylphthalat (DBP), Dioctylphtalat (DOP), Butylbenzylphthalat (BBP), Diisobutylphthalate (DIPB), Diethylphthalat (DEP), Di-(2-ethylhexyl)-phthalat (DEHP), Diisononylphthalat (DINP), Di(2-Propyl-heptyl)phthalate (DPHP), Diisoundecylphthalate (DIUP), Diisodecylphthalat (DIDP), 1,2-Cyclohexandicarbonsäurediisononylester (Hexamoll DINCH), acetyliertem Castoröl, Diester von Isosorbid und Fettsäuren, Mischung aus epoxidiertem Sojamethylester (ESBO) und N,N-Diethylhydroxylamine (DEHA), epoxidiertem Sojamethylester, epoxidiertem Sojaamylester, epoxidiertem Sojahexylester; epoxidiertem Sojaoctylester, Di-Capryl-Sebacin und Triethyl-Citrat;
30 bis 40 Gew.-%, pulverförmiges Polyvinylchlorid, insbesondere ein pulverförmiges Polyvinylchlorid-Homopolymer ausgewählt aus S-PVC, E-PVC und M-PVC, besonders bevorzugt E-PVC.

Erfindungsgemäß liegen die antimikrobiellen Wirkstoffe W 1 und W2 in der oben beschriebenen Formulierung in einem Gewichtsverhältnis W1 zu W2 im Bereich von 1:4 bis 1:99, bevorzugt im Bereich von 1:5 bis 1:20, insbesondere bevorzugt im Bereich von 1:8 bis 1:10, ganz besonders bevorzugt von 1:9 vor.

In einer bevorzugten Ausführungsform ergeben die oben genannten Mengen an W1, W2, Weichmacher und Polyvinylchlorid 100 Gew.-%. Alle obigen Angaben in Gew.-% beziehen sich auf die gesamte antimikrobielle Formulierung.

Ein weiterer Gegenstand der Erfindung ist ein Verfahren zur Herstellung einer antimikrobiellen Formulierung wie oben beschrieben, bei dem man die antimikrobiellen Wirkstoffe W und W2 sowie optional die eine weitere Komponente X oder mehrere der weiteren Komponenten X vermischt werden. Die Herstellung kann beispielsweise dadurch erfolgen, dass man die mindestens eine weitere Komponente X, insbesondere mindestens einen Weichmacher oder eine Mischung aus mindestens einem Weichmacher und einem pulverförmigen Polyvinylchlorid, vorlegt und dann die beiden Wirkstoffe W1 und W2 zufügt. Bevorzugt umfasst die Herstellung der antimikrobiellen Formulierung intensives Vermischen der Komponenten bei einer Temperatur im Bereich von 20 bis 80°C, insbesondere bei 20 bis 50 °C.

Betreffend die Komponenten W1, W2 und X gelten die oben - im Zusammenhang mit der erfindungsgemäßen Formulierung - genannten bevorzugten Ausführungsformen.

Gegenstand der Erfindung ist zudem die Verwendung der oben beschriebenen antimikrobiellen Formulierungen zur Bekämpfung von Mikroorganismen, insbesondere Bakterien, Pilzen, Hefen und Algen, insbesondere von schädlichen Mikroorganismen, wie z.B. Schimmelpilzen, in Polyvinylchlorid-Polymermaterialien.

Insbesondere betrifft die Erfindung die Verwendung der oben beschriebenen antimikrobiellen Formulierungen zur Bekämpfung von Mikroorganismen in Polyvinylchlorid Polymermaterialien, insbesondere in thermoplastischen Formmassen oder Formteilen, bevorzugt in PVC-Folien. Bevorzugt handelt es sich bei den Polymermaterialien um Weich-PVC. Insbesondere wird die antimikrobielle Formulierung zur Bekämpfung von Mikroorganismen, insbesondere von Pilzen, Hefen, Bakterien und Algen, insbesondere von Schimmelpilzen, insbesondere von *Aspergillus niger,* in Weich-Polyvinylchlorid eingesetzt.

Insbesondere betrifft die Erfindung die Verwendung der oben beschriebenen antimikrobiellen Formulierungen zur Bekämpfung von Mikroorganismen in Polyvinylchlorid-zusammensetzungen (Polyvinylchlorid-Polymermaterialien), insbesondere in Polyvinylchlorid-Zusammensetzungen enthaltend mindestens 30 Gew.-%, insbesondere mindestens 50 Gew.-% Polyvinylchlorid.

Vorzugsweise soll die erfindungsgemäße Formulierung gegen Bakterien, Pilze, Hefen und Algen wirksam sein, insbesondere gegen Schimmelpilze und Hefen, insbesondere gegenüber Pilzen der Gattung Aspergillus, wie beispielsweise *Aspergillus niger.* Vorzugsweise soll die erfindungsgemäße Formulierung gegen Mikroorganismen ausgewählt aus Vertretern der folgenden Gattungen wirksam sein:
*Alternaria,* wie *Alternaria alternata; Aspergillus,* wie *Aspergillus niger, Aspergillus repens; Aureobasidium,* wie *Aureobasidium pullulans; Chaetomium,* wie *Chaetomium globosum; Coniophora,* wie *Coniophora puteana; Cladosporium,* wie *Cladosporium cladosporoides; Candida,* wie *Candida albicans; Lentinus,* wie *Lentinus tigrinus; Penicillium,* wie *Penicillium funiculosum; Rhodotorula,* wie *Rhodotorula rubra; Sclerophoma,* wie *Sclerophoma pityophila; Trichoderma,* wie *Trichoderma viride; Ulocladium,* wie *Ulocladium atrum; Escherichia,* wie *Escherichia coli; Pseudomonas, wie Pseudomonas aeruginosa; Staphylococcus,* wie *Staphylococcus aureus.*

Ein weiterer Gegenstand der Erfindung sind thermoplastische Formmasse enthaltend mindestens 30 Gew.-% Polyvinylchlorid, Zinkpyrithion (ZnPT) als ersten antimikrobiellen Wirkstoff W1 und 2-n-Butyl-1,2-benzisothiazolin-3-on (BBIT) oder N-(Trichlormethylthio)phthalimid (Folpet) als zweiten antimikrobiellen Wirkstoff W2, wobei die antimikrobiellen Wirkstoffe W1 und W2 in einem Gewichtsverhältnis W1 zu W2 im Bereich von 1:4 bis 1:99, bevorzugt im Bereich von 1:5 bis 1:20, insbesondere bevorzugt im Bereich von 1:8 bis 1:10, ganz besonders bevorzugt von 1:9, vorliegen.

Betreffend die Komponenten gelten die oben - im Zusammenhang mit der erfindungsgemäßen antimikrobiellen Formulierung - genannten bevorzugten Ausführungsformen.

Insbesondere betrifft die vorliegende Erfindung eine thermoplastische Formmasse enthaltend mindestens 30 Gew.-% Polyvinylchlorid und 0,1 bis 10 Gew.-%, insbesondere 0,5 bis 5 Gew.-%, der oben beschriebenen erfindungsgemäßen antimikrobiellen Formulierung.

Bevorzugt enthält die erfindungsgemäße thermoplastische Formmasse 30 bis 80 Gew.-%, bevorzugt 40 bis 70 Gew.-%, insbesondere bevorzugt 50 bis 60 Gew.-%, bezogen auf die Formmasse, Polyvinylchlorid, insbesondere pulverförmiges Polyvinylchlorid, bevorzugt Polyvinylchlorid-Homopolymer ausgewählt aus E-PVC (Emulsions-PVC), S-PVC (Suspensions-PVC) und/oder M-PVC (Masse-PVC), insbesondere bevorzugt E-PVC. In einer Ausführungsform kann die thermoplastische Formmasse als Polyvinylchlorid auch modifizierte Vinylchlorid-Polymerisate enthalten. Insbesondere kann Polyvinylchlorid auch umfassen: Copolymerisate aus Vinylchlorid mit Vinylacetat, Acrylaten, Maleinsäure, Propylen, Vinylethern oder Arylnitril; Pfropfpolymerisate von Vinylchlorid auf Acrylester-Kautschuk oder auf Ethylen/Vinylacetat-Copolymerisaten oder auf Acrylnitril-Butadien-Kautschuk; und/oder chloriertes Polyvinylchlorid (C-PVC). Bevorzugt enthält die erfindungsgemäße thermoplastische Formmasse mindestens 70 Gew.-%, insbesondere 80 bis 100 Gew.-%, bezogen auf die gesamten polymeren Bestandteile, Polyvinylchlorid.

Neben Polyvinylchlorid kann auch eine weitere polymere Komponente enthalten sein, beispielsweise Acrylester, Acrylester-Kautschuk, Acrylnitril-Butadien-Styrol (ABS) und/oder chloriertes Polyethylen. Gängige Polyvinylchlorid-Typen und modifizierte Vinylchlorid-Polymerisate sind beispielsweise in "PVC-Stabilisatoren", M. Schiller, ISBN 978-3-446-41910-0, 2010, Seiten 1 bis 4 und "Kunststoffchemie für Ingenieure", W. Kaiser, ISBN 978-3-446-41325-2, 2007, Seiten 269 bis 275, beschrieben.

Bevorzugt enthält die oben beschriebenen erfindungsgemäße thermoplastische Formmasse eine Gesamtmenge an antimikrobiellen Wirkstoffen W1 und W2 im Bereich von 0,01 bis 10 Gew.-%, bevorzugt von 500 bis 2.500 ppm, bevorzugt von 1.000 bis 2.000 ppm, bezogen auf die gesamte Formmasse. Die erfindungsgemäße Formmasse kann neben den Wirkstoffen W1 und W2 noch einen oder mehrere weitere antimikrobielle Wirkstoffe (z.B. wie oben beschrieben) enthalten, wobei in diesem Fall die Gesamtmenge an antimikrobiellen Wirkstoffen 0,1 bis 15 Gew.-% beträgt.

Die Angabe ppm bedeutet im Sinne der vorliegenden Erfindung mg/kg.

Typischerweise kann die thermoplastische Formmasse weitere bekannte Additive für Polyvinylchlorid enthalten. Insbesondere enthält die oben beschriebene thermoplastische Formmasse mindestens ein weiteres Additiv ausgewählt aus der Gruppe bestehend aus Weichmachern, Thermo-Stabilisatoren, UV-Stabilisatoren, Füllstoffe, Faserstoffen, Pigmenten und Schlagzäh-Modifikatoren. Typische Additive für PVC-Formmassen und insbesondere für Weich-PVC-Formmassen sind beispielsweise in "PVC-Stabilisatoren", M. Schiller, ISBN 978-3-446-41910-0, 2010, Seite 7 bis 56 beschrieben

Bevorzugt enthält die erfindungsgemäße thermoplastische Formmasse mindestens einen Weichmacher. Unter einem Weichmacher ist im Sinne der vorliegenden Erfindung ein Löse- bzw. Quellmittel zu verstehen, das in ein Polymermaterial (insbesondere ein thermoplastisches Polymermaterial) eingearbeitet wird und dieses homogen durchdringt, um die Flexibilität, die Verarbeitbarkeit oder die Dehnbarkeit der Polymermaterials zu verbessern. Ein Weichmacher kann insbesondere die Schmelzviskosität oder die Glasübergangstemperatur des Polymermaterials verringern, er verändert aber typischerweise nicht die chemische Zusammensetzung des Polymers. Typische Weichmacher sind beispielsweise in "Plastics Additives", Gächter/Müller, 4.Aufl., Hanser Verlag, 1993, Seiten 369 bis 403 beschrieben.

Bevorzugt werden als Weichmacher Ester der Phthalsäure mit aliphatischen Alkoholen (beispielsweise Di-n-Butylphthalat (DBP), Dioctylphtalat (DOP), Butylbenzylphthalat (BBP), Diisobutylphthalate (DIPB), , Diethylphthalat (DEP), Di- (2-ethylhexyl)- phthalat (DEHP), Diisononylphthalat (DINP), Di(2-Propyl-heptyl)phthalate (DPHP), Diisoundecylphthalate (DIUP), Diisodecylphthalat (DIDP)), Phosphorsäureester, (z.B. Tris (2-Ethylhexyl)phosphat), aliphatische Ester (Ester einer aliphatischen Carbonsäure und eines aliphatischen Alkohols), wie Adipinsäureester (z.B. Di-2-Ethylhexyladipat), aliphatische Ester von Cyclohexandicarbonsäure, insbesondere C₂-C₂₀-Alkylester von 1,2-Cyclohexandicarbonsäure (wie beispielsweise 1,2-Cyclohexan-dicarbonsäurediisononylester, DINCH), oder Weichmacher auf Basis von nachwachsenden Rohstoffen (biobasierte Weichmacher), wie Sojabohnenölderivate, Levulinsäureketale, Glycerinester und/oder Isosorbit-diester eingesetzt. Als biobasierte Weichmacher kann insbesondere mindestens ein Weichmacher eingesetzt werden ausgewählt aus der Gruppe bestehend aus acetyliertem Castoröl (Soft-N-Safe®, Hersteller Danisco), Diester von Isosorbid und Fettsäuren (Polysorb® ID 37, Hersteller Roquette FrèresStarch), Mischung aus epoxidiertem Sojamethylester ESBO und N,N-Diethylhydroxylamine DEHA (Kalflex® 14A, Hersteller Varterco), epoxidiertem Sojamethylester (Nexo EO1, Hersteller Nexoleum), epoxidiertem Sojaamylester (Resiflex® K 50, Hersteller Resypar); epoxidiertem Sojahexylester (Resiflex® K 60, Hersteller Resypar), epoxidiertem Sojaoctylester (PLS Green®, Hersteller Petrom), Di-Capryl-Sebacin (DCS, Hersteller Jayant-Agro-Organicscastor) und Triethyl-Citrat (TEC, Hersteller Indo-Nippon Chemicals). Unter Sojaalkylestern versteht der Fachmann Ester der jeweiligen Alkohole mit den vom Sojaöl abgeleiteten Fettsäuren. Bekanntermaßen ist Sojaöl eine Mischung aus Fetten basierend auf verschiedenen Fettsäuren, z.B. Ölsäure, Linolsäure, Linolensäure, Palmitinsäure und Stearinsäure, wobei die Zusammensetzung in Abhängigkeit von der Herstellung und dem Rohstoff variieren kann.

Bevorzugt wird mindestens ein Weichmacher ausgewählt aus der Gruppe bestehen aus Din-Butylphthalat (DBP), Dioctylphtalat (DOP), Butylbenzylphthalat (BBP), Diisobutylphthalate (DIPB), Diethylphthalat (DEP), Di- (2-ethylhexyl)- phthalat (DEHP), Diisononylphthalat (DINP), Di(2-Propyl-heptyl)phthalate (DPHP), Diisoundecylphthalate (DIUP), Diisodecylphthalat (DIDP), 1,2-Cyclohexandicarbonsäurediisononylester (Hexamoll DINCH), acetyliertem Castoröl, Diester von Isosorbid und Fettsäuren, Mischung aus epoxidiertem Sojamethylester (ESBO) und N,N-Diethylhydroxylamine (DEHA), epoxidiertem Sojamethylester, epoxidiertem Sojaamylester; epoxidiertem Sojahexylester, epoxidiertem Sojaoctylester, Di-Capryl-Sebacin und Triethyl-Citrat eingesetzt. Bevorzugt wird 1,2-Cyclohexandicarbonsäurediisononylester (Hexamoll DINCH) und/oder ein oben beschriebener bio-basierter Weichmacher eingesetzt; besonders bevorzugt wird 1,2-Cyclohexandicarbonsäurediisononylester (Hexamoll DINCH) eingesetzt.

Typischerweise enthält die erfindungsgemäße thermoplastische Formmasse bis zu 45 Gew.-%, insbesondere 10 bis 40 Gew.-%, insbesondere 35 bis 40 Gew.-%, bezogen auf die gesamte Formmasse, mindestens eines Weichmacher.

Typischerweise können gängige Stabilisatoren für PVC als weitere Additive eingesetzt werden. Stabilisatoren sollen insbesondere die Thermostabilität der PVC-Formmassen während der Verarbeitung erhöhen und eine Zersetzung oder Vergilbung verhindern. Zudem werden oft UV-Stabilisatoren zur Erhöhung der Beständigkeit gegenüber sichtbaren und UV-Licht verwendet.
Die wichtigsten Klassen von Thermo-Stabilisatoren sind Metallseifen, beispielsweise Barium-, Zink- und Calciumsalze von insbesondere höheren Fettsäuren, insbesondere der Stearinsäure, einschließlich deren Mischungen und gemischten Salzen auch Metallseifen genannt Organozinnverbindungen, z. B. aliphatische Zinnmercaptide oder Thiosäuresalze wie Octylzinnmercaptid und Dioctylzinnthiopropionat, sowie eine ganze Reihe weiterer Verbindungen, darunter auch aromatische Verbindungen wie Zinkbutylbenzoat, Dibenzoylmethan, Bariumdimethylethylbenzoat, Metallsalzkomplexe von Nonylphenol und phosphorhaltige Verbindungen.

Geeignete Stabilisator sind insbesondere Barium/Zink-Stabilisatoren, Calcium/Zink-Stabilisatoren, Calcium/Aluminium/Magnesium/Zink-Stabilisatoren Barium/Cadmium-Stabilisatoren, Blei-Stabilisatoren oder metallfreie Stabilisatoren und Mischungen von solchen. Diese Stabilisatoren werden einzeln oder als Gemische hergestellt und verwendet. Bevorzugt werden Barium/Zink-Stabilisatoren, Calcium/Zink-Stabilisatoren und/oder Calcium/Aluminium/Magnesium/Zink-Stabilisatoren eingesetzt. Typische PVC-Stabilisatoren sind beispielsweise in "Plastics Additives", Gächter/Müller, 4.Aufl., Hanser Verlag, 1993, Seiten 281 bis 304, beschrieben.

Die erfindungsgemäßen Polymermaterialien (Formmassen und Formteile) enthalten oftmals 0 bis 5 Gew.-%, insbesondere 0,5 bis 5 Gew.-%, bevorzugt 0,1 bis 3 Gew.-% an handelsüblichen Stabilisatoren, wie z. B. Sanduvor VSU (Stabilisator, Clariant), Hostavin N24 (Stabilisator, Clariant) und LASTAB, Firma Lamberti (LABSTAB DC 7044 SW, LASTAB DP 860-900 LASTAB DP 917). Die Formmassen können zudem 0 bis 3 Gew.-% eines Katalysators, z. B. Bärostab UBZ 660-1 (Sn-organischer Katalysator, Bodo-Möller Chemie) enthalten.

Weiterhin enthält die PVC-Formmasse oft Füllstoffe (z.B. mineralische Füllstoffe), Faserstoff (z. B. organische oder anorganische Fasern) und/oder Pigmente. Füllstoffe, Faserstoff und/oder Pigmente können insbesondere dazu dienen die Härte, und Abriebbeständigkeit, Festigkeit, z.B. Zugfestigkeit der Formteile zu verbessern. Bevorzugt enthält die oben beschriebene thermoplastische Formmasse mindestens einen mineralischen Füllstoff, beispielsweise ausgewählt aus Calciumcarbonat, Calciumsulfate, Silikaten, Titandioxid, Talk, Kaolin, bevorzugt Titandioxid. Füllstoffe, Faserstoff und/oder Pigmente sind typischerweise in einer Menge von 0 bis 10 Gew.-%, insbesondere 0,5 bis 6 Gew.-% in der thermoplastischen Formmasse enthalten.
Typische Füllstoffe sind beispielsweise in "Plastics Additives", Gächter/Müller, 4.Aufl., Hanser Verlag, 1993, Seiten 533 bis 553 beschrieben. Typische Faserstoffe sind beispielsweise in "Plastics Additives", Gächter/Müller, 4.Aufl., Hanser Verlag, 1993, Seiten 593 bis 628 beschrieben.

Außerdem können auch Additive zur Verbesserung der Verarbeitbarkeit, wie z.B. Gleitmittel zugesetzt werden. Häufig werden den PVC-Formmassen auch Schlagzäh-Modifikatoren zugesetzt.

In einer bevorzugten Ausführungsform betrifft die Erfindung eine thermoplastische Formmasse enthaltend die folgenden Komponenten (bevorzugt bestehend aus den folgenden Komponenten):
30 bis 80 Gew.-%, bevorzugt 40 bis 70 Gew.-%, insbesondere bevorzugt 50 bis 60 Gew.-%, Polyvinylchlorid, insbesondere pulverförmiges Polyvinylchlorid, insbesondere pulverförmiges Polyvinylchlorid-Homopolymer ausgewählt aus E-PVC, S-PVC und M-PVC, bevorzugt E-PVC;
10 bis 40 Gew.-%, insbesondere 35 bis 40 Gew.-% mindestens eines Weichmachers, insbesondere ausgewählt aus der Gruppe bestehen aus Di-n-Butylphthalat (DBP), Dioctylphtalat (DOP), Butylbenzylphthalat (BBP), Diisobutylphthalate (DIPB), Diethylphthalat (DEP), Di-(2-ethylhexyl)-phthalat (DEHP), Diisononylphthalat (DINP), Di(2-Propyl-heptyl)phthalate (DPHP), Diisoundecylphthalate (DIUP), Diisodecylphthalat (DIDP), 1,2-Cyclohexandicarbonsäurediisononylester (Hexamoll DINCH), acetyliertem Castoröl, Diester von Isosorbid und Fettsäuren, Mischung aus epoxidiertem Sojamethylester (ESBO) und N,N-Diethylhydroxylamine (DEHA); epoxidiertem Sojamethylester, epoxidiertem Sojaamylester, epoxidiertem Sojahexylester, epoxidiertem Sojaoctylester, Di-Capryl-Sebacin und Triethyl-Citrat;
0,01 bis 10 Gew.-%, bevorzugt von 500 bis 2.500 ppm, insbesondere bevorzugt im Bereich von 1.000 bis 2.000 ppm Gesamtmenge an antimikrobiellen Wirkstoffen W1 und W2;
0 bis 10 Gew.-% mindestens eines weiteren Additives ausgewählt aus Thermo-Stabilisatoren, UV-Stabilisatoren, Füllstoffe, Pigmenten und Schlagzäh-Modifizierern;
wobei die antimikrobiellen Wirkstoffe W1 und W2 in einem Gewichtsverhältnis W1 zu W2 im Bereich von 1:4 bis 1:99, bevorzugt im Bereich von 1:5 bis 1:20, insbesondere bevorzugt im Bereich von 1:8 bis 1:10, ganz besonders bevorzugt von 1:9, vorliegen. Alle obigen Angaben in Gew.-% beziehen sich auf die gesamte thermoplastische Formmasse.

Die vorliegende Erfindung ist zudem gerichtet auf Formteilen, die aus den oben beschriebenen thermoplastischen Formmassen hergestellt wurden. Insbesondere handelt es sich bei den Formteilen um Folien, Fußbodenbeläge, Beschichtungen und Planen.

Für die Formteile gelten die oben - im Zusammenhang mit den thermoplastischen Formmassen und den antimikrobiellen Formulierungen - beschriebenen bevorzugten Ausführungsformen analog.

Die Erfindung betrifft zudem die Verwendung der erfindungsgemäßen thermoplastischen Formmasse zur Herstellung eines Formteils sowie ein Verfahren zur Herstellung eines Formteils, wobei die erfindungsgemäße thermoplastische Formmasse einem thermoplastischen Umform- oder Formgebungsprozess unterworfen wird. Insbesondere betrifft die vorliegende Erfindung ein Verfahren zu Herstellung eines Weich-PVC Formteils, wobei ein Plastisols enthaltend pulverförmiges PVC, mindestens einen Weichmacher und die erfindungsgemäße antimikrobielle Formulierung auf einem Träger bei Temperaturen im Bereich von 160 bis 200 °C geliert wird.

Die verschiedenen Verfahren zur Herstellung von Weich-PVC sind dem Fachmann bekannt und beispielsweise in Kunststoff-Handbuch, Polyvinylchlorid, Band 2, Hrgs. H.K. Felger, ISBN 3-446-14360-2, 1986, Seiten 1077 bis 1116 beschrieben.

Die Erfindung wird durch die nachfolgenden Beispiele und Ansprüche näher erläutert:

### Beispiel 1 - Herstellung von antimikrobiellen Formulierungen

Es wurden jeweils etwa 500 g der folgenden Formulierungen (BZ und FZ) durch inniges Vermischen der Komponenten hergestellt:

| | | |
|---|---|---|
| BZ: | 1 bis 3Gew.-% | Zinkpyrithion (ZnPT) (W1) |
| | 15 bis 20 Gew.-% | 2-n-Butyl-1,2-benzisothiazolin-3-on (BBIT) (W2) |
| | 35 bis 37 Gew.-% | PVC Pulver (Verdicker, Hilfsmittel) |
| | 43 bis 45 Gew.-% | Weichmacher auf der Basis eines 1,2-Cyclohexandicarbonsäureesters |
| FZ: | 2 bis 3Gew.-% | Zinkpyrithion (ZnPT) (W1) |
| | 20 bis 22 Gew.-% | N-(Trichlormethylthio)phthalimid (Folpet) (W2) |
| | 34 bis 36 Gew.-% | PVC Pulver (Verdicker, Hilfsmittel) |
| | 40 bis 42 Gew.-% | Weichmacher auf der Basis eines 1,2-Cyclohexandicarbonsäureesters |

### Beispiel 2 - Herstellung von antimikrobiell ausgerüsteten Polyvinylchlorid-Folien

Es wurden die folgenden antimikrobiellen Wirkstoffe verwendet: 2-n-Butyl-1,2-benzisothiazolin-3-on (BBIT), N-(Trichlormethylthio)phthalimid (Folpet), Zinkpyrithion (ZnPT), Dichloroctylisothiazolin (DCOIT). Mittels eines Dissolvers wurden PVC-Formmassen (Plastisole) mit folgenden Zusammensetzungen hergestellt:

### a) Rezeptur 1:

| | |
|---|---|
| 0,6% Gew.-% | der oben beschriebenen Formulierung FZ (dies entspricht 1500 ppm FZ, 1350 ppm Folpet und 150 ppm ZnPT bezogen auf die gesamte PVC-Formmasse) |
| oder 0,9 Gew.-% | der oben beschriebenen Formulierung BZ (dies entspricht 1950 ppm BZ, 1800 ppm BBIT und 150 ppm ZnPT, bezogen auf die gesamte PVC-Formmasse) |
| 60 g | Vinnolit P4472 (Polyvinylchlorid der Vinnolit GmbH) |
| 40 g | DINCH (Cyclohexandicarbonsäureester, Weichmacher, BASF) |
| 0.6 g | Sandvour VSU (Stabilisator, Clariant) |
| 0.4 g | Hostavin N24 (Stabilisator, Clariant) |
| 2,0 g | PVC- Stabilisator der Firma Bärlocher, Typ BS UBZ 729-1 S RF |

### b) Rezeptur 2:

| | |
|---|---|
| 0,6% Gew.-% | der oben beschriebenen Formulierung FZ (dies entspricht 1500 ppm FZ, 13 50 ppm Folpet und 150 ppm ZnPT) |
| oder 0,9 Gew.-% | der oben beschriebenen Formulierung BZ (dies entspricht 1950 ppm BZ, 1800 ppm BBIT und 150 ppm ZnPT) |
| 60 g | Vinnolit P4472 (Polyvinylchlorid der Vinnolit GmbH) |
| 40 g | DINCH (Cyclohexandicarbonsäureester, Weichmacher, BASF) |
| 5 g | TiO₂, Kronos 2220 |
| 0.6 g | Sandvour VSU (Stabilisator, Clariant) |
| 0.4 g | Hostavin N24 (Stabilisator, Clariant) |
| 2,0 g | PVC- Stabilisator der Firma Bärlocher, Typ BS UBZ 729-1 S RF |

Darüberhinaus wurden in analoger Weise Formmassen mit den folgenden Stabilisatoren hergestellt: LASTAB DC 7044 SW; LASTAB DP 860-900; LASTAB DP 917 (alle Hersteller Lamberti). Zudem wurden PVC-Formmassen mit den oben genannten antimikrobiellen Wirkstoffen in analoger Weise hergestellt.

In Tabelle 1 sind die nach Rezeptur 2 hergestellten Formmassen aufgelistet.

Die so vorbereiteten Formmassen wurden im Mathis- Labcoater bei einer Strichdicke von 0.7 mm und einer Gelierung bei 190°C für 90 sec zu Folien verarbeitet.

**Tabelle 1: Herstellung von antimikrobiell ausgerüsteten PVC-Folien**

| Nr. | Wirkstoff | Gesamt-Wirkstoff-Konzentration ppm (mg Wirkstoff /kg PVC-Formmasse) |
|---|---|---|
| C1 | BBIT | 2.000 |
| C2 | Folpet | 1.500 |
| C3 | ZnPT | 500 |
| C4 | DCOIT | 2.000 |
| C4 | BBIT/ZnPT im Gewichtsverhältnis 1:1 | 2.000 |
| FZ | Folpet/ZnPT im Gewichtsverhältnis 9:1 | 1.500 |
| BZ | BBIT/ZnPT im Gewichtsverhältnis 9:1 | 1.950 |

### Beispiel 3: Antimikrobielle Untersuchungen

Zur Charakterisierung der gemäß Beispiel 2 hergestellten Polyvinylchlorid-Folien wurden verschiedene Untersuchungen zur Resistenz gegenüber schädlichen Mikroorganismen und zur Beständigkeit der Resistenz gegenüber schädlichen Mikroorganismen bei UV-Bestrahlung und bei Behandlung mit Wasser (Wässerungsbeständigkeit) sowie zur Vergilbung bei thermischer Belastung durchgeführt.

### 3.1 Testmethoden

### a) Bestimmung der fungistatischen Wirksamkeit nach EN ISO 846 B

Die Widerstandsfähigkeit der PVC-Folien aus Beispiel 2 gegenüber Pilzen wurde gemäß der Norm EN ISO 846 B bestimmt. Dazu wurden quadratische Muster von 50 mm x 50 mm jeweils in einer 5-fachen Bestimmung untersucht. Die Muster wurden auf einen Glucose-haltigen Mineralsalz-Agar gelegt. Die Muster- und Agar-Oberfläche wurde mit einer kombinierten Sporenlösung beimpft und während 28 Tagen bei 28°C bebrütet.

Als Testorganismen wurden in Form einer Sporensuspension die folgenden Mikroorganismen eingesetzt: *Aspergillus niger -* ATCC 6275, *Penicillium funiculosum -* ATCC 36839, *Chaetomium globosum -* ATCC 6205, *Trichoderma virens -* ATCC 9645 und *Paecilomyces varioti -* ATCC 18502

Die Testauswertung erfolgte mittels visueller Beurteilung der Entwicklung des mikrobiellen Bewuchses auf der Oberfläche der Muster. Dabei werden die Noten 0 (kein Bewuchs) bis 5 (kompletter Bewuchs) vergeben, wobei die Noten 0 bis 5 die folgenden Erscheinungsbilder beschreiben:

| | |
|---|---|
| Note 0: | Es ist kein Bewuchs von Pilzen auf dem Muster zu erkennen |
| | (ausgezeichnete Resistenz gegen Schimmelpilze) |
| Note 1: | Pilzspuren auf der Musteroberfläche sind nur mit dem Mikroskop zu erkennen |
| | (gute Resistenz gegen Schimmelpilze) |
| Note 2 - 5: | Pilzbewuchs ist auf der Musteroberfläche mit bloßem Auge zu erkennen |
| | (ungenügende Resistenz gegen Schimmelpilze) |

### b) Bestimmung der antimykotischen Wirksamkeit - Agar-Platten-Test

Mittels des Agar-Platten-Tests kann eine qualitative Prüfung der antimykotischen Wirksamkeit von diffundierenden antimykotischen Wirkstoffen auf behandelten Materialien schnell und einfach erfolgen.

Aus den PVC-Folien aus Beispiel 2 wurden Muster mit Durchmessern von 25 mm hergestellt und in einer 1-fach-Bestimmung untersucht. Die Muster (eventuell gemäß Bespielen 3.1c oder 3.1d vorbehandelt) wurden auf Nährboden, der mit den TestOrganismen beimpft wurde, gelegt und für 24 h im Kühlschrank gelagert. Danach wurden die Muster 7 Tagen bei 28°C bebrütet. Als Test-Organismus wurde *Aspergillus niger* eingesetzt.

Die Testauswertung erfolgte mittels visueller Beurteilung des Pilzbewuchs unter oder auf dem Muster beziehungsweise der Größe einer vorhandenen Hemmzone um das Muster. Dabei wurden die folgenden Noten unterschieden:

| | |
|---|---|
| Note 0: | Kein Bewuchs auf Prüfling, Hemmzone um Muster beträgt 0 mm oder grösser |
| | Sehr gute antimykotische Wirkung |
| Note 1: | Schwacher Bewuchs auf dem Prüfling, d.h. das Muster ist in der Kontaktzone mindestens 95% frei von Pilzbewuchs Akzeptable antimykotische Wirkung |
| Note 2: | Mittlerer oder voller Bewuchs. Das Muster zeigt in der Kontaktzone deutlich zu erkennenden Pilzbewuchs, |
| | Ungenügende antimykotische Wirkung |

### c) Bestimmung der Beständigkeit der antimykotische Wirkung bei UV-Bestrahlung

Aus den PVC-Folien aus Beispiel 2 wurden Muster mit Durchmessern von 25 mm hergestellt. Die PVC-Muster wurden für 720 Stunden UV-Strahlung ausgesetzt (QUV mit UVA-340 nm Fluorescent Lampe, bei einer Belichtungsstärke von 0.78 W/m² und einer Wellenlänge von 340 nm). Danach wurde die Wirksamkeit gegenüber *Aspergillus niger* gemäß Agar-Platten-Test wie in Beispiel 3. 1b beschrieben bestimmt.

### d) Bestimmung der Wässerungsbeständigkeit der antimykotische Wirkung

Aus den PVC-Folien aus Beispiel 2 wurden Muster mit Durchmessern von 25 mm hergestellt. Die Muster wurden für 720 Stunden in fließendem Leitungswasser bei Raumtemperatur gelagert. Danach wurde die Wirksamkeit gegenüber *Aspergillus niger* gemäß Agar-Platten-Test wie in Beispiel 3.1b beschrieben bestimmt.

### e) Bestimmung der thermischen Beständigkeit gegenüber Vergilben

Die PVC-Folie aus Beispiel 2 wurden für die genannte Zeit einer Temperatur von 190° C ausgesetzt. Es wurde die Zeit (in Minuten, min) notiert, bei der gerade noch keine sichtbare Verfärbung auftritt.

### 3.2 Testergebnisse

Es wurde die fungistatische Wirksamkeit der unbehandelten PVC-Muster wie in Beispiele 3.1a beschrieben bestimmt. Zudem wurde die antimykotische Wirksamkeit gegenüber dem Organismus *Aspergillus niger* gemäß Beispiel 3.1b bestimmt, nachdem die Muster wie in Beispiel 3.1c mit UV-Strahlung oder wie in Beispiel 3.1d beschrieben mit Wasser behandelt wurden. Darüberhinaus wurde die Beständigkeit gegenüber Vergilben bei thermischer Belastung gemäß Beispiel 3.1e bestimmt. Die Testergebnisse betreffend die PVC-Folien aus Beispiel 2 gemäß Tabelle 1 sind in den folgenden Tabellen 2 und 3 zusammengefasst.

**Tabelle 2: Ergebnisse zur antimykotische Wirksamkeit und deren Beständigkeit**

| Nr. | Wirkstoff | Wirksamkeit gemäß EN ISO 846 B (Beispiel 3.1 a) | Wirksamkeit nach UV (Beispiel 3.1 c) | Wirksamkeit nach Wässerung (Beispiel 3.1 d) |
|---|---|---|---|---|
| C1 | BBIT | 2 | 1 | 1 |
| C2 | Folpet | 2 | 0 | 0 |
| C3 | ZnPT | 1 | 1 | 1 |
| C4 | DCOIT | 2 | 2 | 0 |
| C4 | BBIT/ZnPT 1:1 | 0 | - | - |
| FZ | Folpet/ZnPT 9:1 | 0 | 0 | 0 |
| BZ | BBIT/ZnPT 9:1 | 0 | 1 | 1 |

**Tabelle 3: Ergebnisse zur Beständigkeit gegenüber Vergilben**

| Nr. | Wirkstoff | Zeit bis zur Verfärbung [min] (Beispiel 3.1 e) |
|---|---|---|
| C1 | BBIT | 16 |
| C2 | Folpet | 15 |
| C3 | ZnPT | 18 |
| C4 | DCOIT | 17 |
| C5 | BBIT/ZnPT 1:1 | 16 |
| FZ | Folpet/ZnPT 9:1 | 18 |
| BZ | BBIT/ZnPT 9:1 | 21 |

Die experimentellen Ergebnisse zeigen, dass Folien mit einer 1:1 Mischung aus ZnPT und BBIT zwar eine gute oder ausreichende Beständigkeit gegenüber Schimmelpilzen aufweisen, aber eine hohe Neigung zur Vergilbung zeigen. Bei einer Ausrüstung mit ZnPT, BBIT oder Folpet allein erhält man nur eine ungenügende oder nicht optimale antimykotische Wirksamkeit. Bei einer Ausrüstung mit ZnPT, BBIT oder DOICT allein erhält man Folien, die nur eine ungenügende Beständigkeit gegenüber UV-Strahlung aufweisen. Eine Folie, die in allen Bereichen gute oder sehr gute Eigenschaften zeigt, kann mit den bekannten Wirkstoffen oder Wirkstoff-Kombinationen nicht erreicht werden. Dagegen zeigt sich durch die erfindungsgemäße synergistische Kombination von ZnPT und BBIT im Verhältnis 1:9 sowohl eine hervorragende Beständigkeit gegenüber Schimmelpilzen als auch eine Verminderung der Vergilbungsneigung.

Ebenfalls ergeben PVC-Formmassen mit einer synergistischen Kombination von ZnPT und Folpet im bevorzugten Verhältnis 1:9 sehr gute Ergebnisse, insbesondere bei der Stabilität der antimykotischen Wirkung gegenüber UV-Licht und Wässerung.

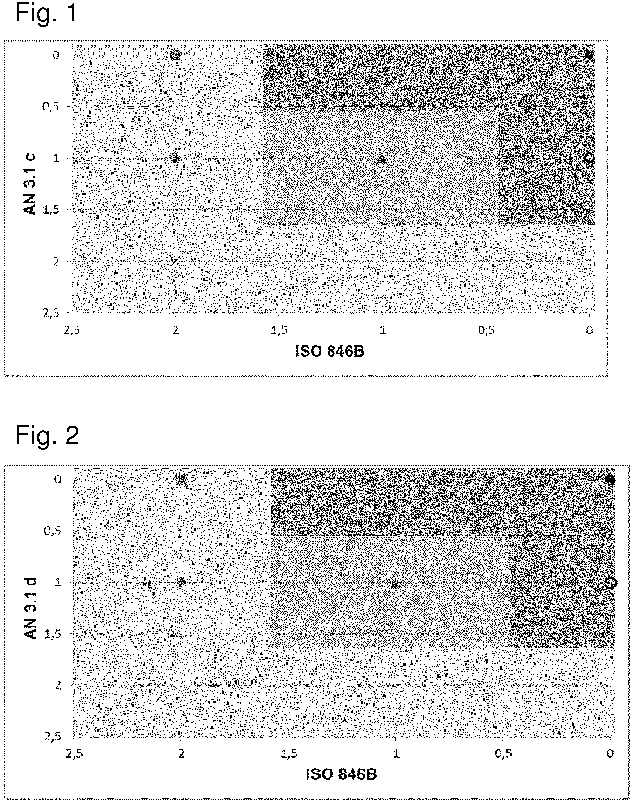

Die Ergebnisse sind zudem in den Figuren 1 bis 3 graphisch verdeutlicht. In den Figuren 1 bis 3 gilt die Zuordnung der Symbole zu den Formulierungen wie folgt:

| | | |
|---|---|---|
| C1 | BBIT | ausgefüllte Raute (◆) |
| C2 | Folpet | ausgefülltes Quadrat (■) |
| C3 | ZnPT | ausgefülltes Dreieck (▲) |
| C4 | DCOIT | Kreuz (x) |
| C5 | BBIT/ZnPT 1:1 | leeres Dreieck (Δ) |
| FZ | Folpet/ZnPT 9:1 | ausgefüllter Kreis (●) |
| BZ | BBIT/ZnPT 9:1 | leerer Kreis (o) |

In Figur 1 wird die Schimmelpilzbeständigkeit gemäß EN ISO 846 B auf der x-Achse gegenüber der Wirkung gegen *Aspergillus niger* nach UV-Bestrahlung (AN 3.1 c), wie in Beispiel 3.1c (Noten 0 bis 2) beschrieben, auf der y-Achse dargestellt. Der hell markierte Bereich links und unten im Diagramm ist nicht akzeptabel, da entweder nur eine geringe Beständigkeit gegenüber Schimmelpilzen oder nur eine geringe Beständigkeit der antimikrobiellen Ausrüstung gegenüber UV-Bestrahlung gegeben ist. Der markierte Bereich in der Mitte ist akzeptabel, liefert aber keine guten Ergebnisse hinsichtlich Effizienz der antimykotische Wirksamkeit und UV-Beständigkeit. Formmassen, die Werte im dunkel markierten Bereich oben rechts aufweisen, sind am besten geeignet, da sie sowohl eine hohe Beständigkeit gegenüber Schimmelpilzen als auch eine hohe UV-Beständigkeit aufweisen.

Es zeigte sich, dass eine erfindungsgemäße Ausrüstung mit ZnPT und Folpet (FZ) im Verhältnis 1:9 (gefüllter Kreis ●) optimal ist, eine Ausrüstung mit ZnPT und BBIT (BZ) im Verhältnis 1:9 (leerer Kreis o) ist ebenfalls gut geeignet.

In Figur 2 wird die Schimmelpilzbeständigkeit gemäß EN ISO 846 B auf der x-Achse gegenüber der Wirkung gegen *Aspergillus niger* nach Wässerung (AN 3.1 d), wie in Beispiel 3.1d (Noten 0 bis 2) beschrieben, auf der y-Achse dargestellt. Analog zu Figur 1 sind Formmassen mit einem Wert im dunkel markierten Bereich oben rechts am besten geeignet, da sie sowohl eine hohe antimykotische Wirksamkeit gegenüber Schimmelpilzen als auch eine hohe Wässerungsbeständigkeit aufweisen. Es zeigte sich wiederrum, dass eine erfindungsgemäße Ausrüstung mit ZnPT und Folpet (FZ) im Verhältnis 1:9 (gefüllter Kreis ●) optimal ist, eine Ausrüstung mit ZnPT und BBIT (BZ) im Verhältnis 1:9 (leerer Kreis o) ist ebenfalls gut geeignet.

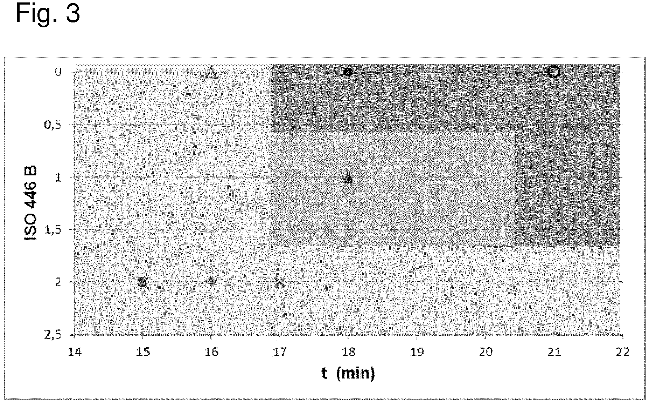

In Figur 3 wird die thermische Beständigkeit (Zeit bis zur der Vergilbung eintritt in min) auf der x-Achse gegenüber der Schimmelpilzbeständigkeit gemäß EN ISO 846 B auf der y-Achse dargestellt. Der hell markierte Bereich links und unten im Diagramm ist nicht akzeptabel, da entweder nur eine geringe Beständigkeit gegenüber Schimmelpilzen gegeben ist oder eine frühe Vergilbung eintritt. Der markierte Bereich in der Mitte ist akzeptabel liefert aber keine guten Ergebnisse hinsichtlich Beständigkeit gegenüber Schimmelpilzen und Vergilbung. Formmassen, die Werte im dunkel markierten Bereich oben rechts aufweisen, sind am besten geeignet, da sie sowohl eine hohe Beständigkeit gegenüber Schimmelpilzen aufweisen, als auch wenig zum Vergilben neigen. Es zeigt sich, dass eine erfindungsgemäße Ausrüstung mit ZnPT und BBIT (BZ) im Verhältnis 1:9 (leerer Kreis o) optimal ist, eine Ausrüstung mit ZnPT und Folpet (FZ) im Verhältnis 1:9 (gefüllter Kreis ●) ist ebenfalls gut geeignet.

## Patentansprüche

1. Formulierung zur Ausrüstung von Polyvinylchlorid-Zusammensetzungen, wobei die Formulierung Zinkpyrithion als ersten antimikrobiellen Wirkstoff W1 und 2-n-Butyl-1,2-benzisothiazolin-3-on oder N-(Trichlormethylthio)-phthalimid als zweiten antimikrobiellen Wirkstoff W2, sowie optional eine oder mehrere weitere Komponenten X enthält, wobei die antimikrobiellen Wirkstoffe W1 und W2 in einem Gewichtsverhältnis W1 zu W2 im Bereich von 1:4 bis 1:99 vorliegen.

2. Formulierung gemäß Anspruch 1, **dadurch gekennzeichnet, dass** sie als antimikrobielle Wirkstoffe ausschließlich Zinkpyrithion und 2-n-Butyl-1,2-benzisothiazolin-3-on oder ausschließlich Zinkpyrithion und N-(Trichlormethylthio)phthalimid enthält.

3. Formulierung gemäß einem der Ansprüche 1 oder 2, **dadurch gekennzeichnet, dass** die Menge der antimikrobiellen Wirkstoffe W1 und W2 zusammen im Bereich von 10 bis 40 Gew.-%, bezogen auf die gesamte Formulierung, liegt.

4. Formulierung gemäß einem der Ansprüche 1 bis 3, **dadurch gekennzeichnet, dass** die antimikrobiellen Wirkstoffe W1 und W2 in einem Gewichtsverhältnis W1 zu W2 im Bereich von 1:8 bis 1:10 vorliegen.

5. Formulierung gemäß einem der Ansprüche 1 bis 4, **dadurch gekennzeichnet, dass** sie 40 bis 60 Gew.-%, bezogen auf die gesamte Formulierung, mindestens eines Weichmachers als weitere Komponente X enthält.

6. Formulierung gemäß einem der Ansprüche 1 bis 5, **dadurch gekennzeichnet, dass** sie 20 bis 40 Gew.-%, bezogen auf die gesamte Formulierung, pulverförmiges Polyvinylchlorid als weitere Komponente X enthält.

7. Formulierung gemäß einem der Ansprüche 1 bis 6, **dadurch gekennzeichnet, dass** sie die folgenden Komponenten enthält:
| | |
|---|---|
| 1 bis 7 Gew.-%, | Zinkpyrithion; |
| 8 bis 38 Gew.-% | 2-n-Butyl-1,2-benzisothiazolin-3-on oder N-(Trichlormethylthio)phthalimid, |
| 40 bis 60 Gew.% | mindestens eines Weichmachers; |
| 20 bis 40 Gew.-% | pulverförmiges Polyvinylchlorid. |

8. Formulierung gemäß einem der Ansprüche 1 bis 7, **dadurch gekennzeichnet, dass** sie in Form eines Plastisols vorliegt und die folgenden Komponenten enthält:
| | |
|---|---|
| 1,5 bis 3 Gew.-%, | Zinkpyrithion (ZnPT); |
| 15 bis 20 Gew.-% | 2-n-Butyl-1,2-benzisothiazolin-3-on oder N-Trichlormethylthio)phthalimid; |
| 40 bis 50 Gew.-%, | mindestens eines Weichmachers; |
| 30 bis 40 Gew.-% | pulverförmiges Polyvinylchlorid. |

9. Verfahren zur Herstellung einer antimikrobiellen Formulierung gemäß einem der Ansprüche 1 bis 8, bei dem die antimikrobiellen Wirkstoffe W1 und W2 sowie optional die eine weitere Komponente X oder mehrere der weiteren Komponenten X vermischt werden.

10. Verwendung einer antimikrobiellen Formulierung nach einem der Ansprüche 1 bis 8 zur Bekämpfung von Mikroorganismen in Polyvinylchlorid-Zusammensetzungen.

11. Verwendung nach Anspruch 10, **dadurch gekennzeichnet, dass** es sich bei der Polyvinylchlorid-Zusammensetzung um Weich-Polyvinylchlorid handelt.

12. Thermoplastische Formmasse enthaltend mindestens 30 Gew.-% Polyvinylchlorid, Zinkpyrithion als ersten antimikrobiellen Wirkstoff W1 und 2-n-Butyl-1,2-benzisothiazolin-3-on oder N-(Trichlormethylthio)phthalimid als zweiten antimikrobiellen Wirkstoff W2, wobei die antimikrobiellen Wirkstoffe W1 und W2 in einem Gewichtsverhältnis W1 zu W2 im Bereich von 1:4 bis 1:99 vorliegen.

13. Thermoplastische Formmasse gemäß Anspruch 12, **dadurch gekennzeichnet, dass** sie eine Gesamtmenge an antimikrobiellen Wirkstoffen W1 und W2 im Bereich von 500 bis 2500 ppm, bezogen auf die gesamte Formmasse, enthält.

14. Thermoplastische Formmasse gemäß einem der Ansprüche 12 oder 13, **dadurch gekennzeichnet, dass** sie folgende Komponenten enthält:
| | |
|---|---|
| 30 bis 80 Gew.-%, | Polyvinylchlorid |
| 10 bis 40 Gew.-%, | mindestens eines Weichmachers; |
| 0,01 bis 10 Gew.-%, | Gesamtmenge an antimikrobiellen Wirkstoffen W1 und W2; |
| 0 bis 10 Gew.-% | mindestens eines weiteren Additives ausgewählt aus Thermo-Stabilisatoren, UV-Stabilisatoren, Füllstoffen, Pigmenten und Schlagzäh-Modifizierern. |

15. Formteil hergestellt aus einer thermoplastischen Formmasse gemäß einem der Ansprüche 12 bis 14.
